# EUROPÄISCHE PATENTSCHRIFT

(11) **EP 3 408 551 B1**
(45) Veröffentlichungstag und Bekanntmachung des Hinweises auf die Patenterteilung: **16.06.2021**
(21) Anmeldenummer: 16829236.5
(22) Anmeldetag: 30.12.2016
(51) Int. Cl.: F16D 25/08

(54) **AKTUATOR, INSBESONDERE NEHMERZYLINDER, FÜR EINE VORRICHTUNG ZUR KUPPLUNGSBETÄTIGUNG IN EINEM KRAFTFAHRZEUG**
ACTUATOR, IN PARTICULAR SLAVE CYLINDER, FOR A DEVICE FOR CLUTCH ACTUATION IN A MOTOR VEHICLE
ACTIONNEUR, EN PARTICULIER CYLINDRE RÉCEPTEUR, POUR UN DISPOSITIF PERMETTANT L'ACTIONNEMENT D'UN EMBRAYAGE DANS UN VÉHICULE AUTOMOBILE

(30) Priorität: 26.01.2016 DE 102016000708
(43) Veröffentlichungstag der Anmeldung: 05.12.2018
(73) Patentinhaber: FTE automotive GmbH, 96106 Ebern (DE)
(72) Erfinder: HEUBNER, Wilhelm, 96274 Itzgrund (DE)
(74) Vertreter: Oppermann, Mark
(86) Internationale Anmeldenummer: PCT/EP2016/002190
(87) Internationale Veröffentlichungsnummer: WO 2017/129217

(56) Entgegenhaltungen:
- EP-A1- 1 630 439
- CN-Y- 201 137 653
- DE-A1-102014 102 880

## Beschreibung

### TECHNISCHES GEBIET

Die Erfindung bezieht sich allgemein auf einen pneumatisch betätigbaren und hydraulisch steuerbaren Aktuator. Insbesondere bezieht sich die Erfindung auf einen solchen Nehmerzylinder für eine Vorrichtung zur Kupplungsbetätigung in einem Kraftfahrzeug, wie sie massenweise in der Automobilindustrie zum Einsatz kommen.

### STAND DER TECHNIK

Automatisierte oder automatische Kupplungsanlagen mit Nassoder Trockenreibkupplungen, die zur Drehmomentübertragung durch Federkraft in einem eingerückten Zustand bzw. geschlossen gehalten werden und mittels eines pneumatischen, hydraulischen oder elektrischen Aktuators gegen die Federkraft in einen ausgerückten bzw. geöffneten Zustand überführt werden können, um die Drehmomentübertragung zu unterbrechen, sind seit langem bekannt. Bei Nutzfahrzeugen (Lastkraftwagen, Omnibusse) mit automatisierten Kupplungsanlagen ("CBW" = "Clutch By Wire") zur Entlastung des Fahrers, mit automatisierten Schaltgetrieben ("ASG" bzw. "AMT" = "Automated Manual Transmission") zur Automatisierung auch der Schaltvorgänge oder mit Doppelkupplungsgetrieben ("DKG") kommen zur Kupplungsbetätigung vornehmlich pneumatische Aktuatoren bzw. Stellzylinder mit zugeordneter, pneumatischer Schaltventilanordnung zum Einsatz, da in Nutzfahrzeugen Druckluft ohnehin zur Verfügung steht, insofern sowohl das Betriebsmedium als auch die Antriebsenergie für einen pneumatischen Aktuator vorhanden und nicht anderweitig vorzuhalten sind.

Bei der Betätigung der Kupplung kommt es darauf an, insbesondere im Bereich des Kupplungsdruckpunkts feinfühlig Stellbewegungen mittels des Aktuators ausführen zu können, um möglichst ruckfrei eine Drehmomentübertragung zu bewirken oder zu unterbrechen. Konventionelle Fahrzeugkupplungen haben eine Kraft-Weg-Kennlinie, bei der die Kraft über dem Weg bis zu einem Maximalwert im Bereich des Kupplungsdruckpunkts kontinuierlich, z.B. im Wesentlichen linear ansteigt und danach wieder mehr oder weniger abfällt. Hieraus ergibt sich, dass der zum Erreichen des Kraftmaximums in einem pneumatischen Aktuator aufgebaute Druck nach Überschreiten dieses Maximums zu hoch ist, um eine Position in der Nähe des Kupplungsdruckpunkts zu halten. Um dennoch eine relativ feinfühlige Positionseinstellung im Bereich des Kupplungsdruckpunkts zu ermöglichen, kommen im Stand der Technik zur Steuerung des Aktuatordrucks relativ aufwendige Algorithmen zum Einsatz, bei denen mit dem Aktuator verbundene, pneumatische Schaltventile getaktet, d.h. pulsweiten- und/oder pulsfrequenzmoduliert angesteuert werden. Um die Feinfühligkeit der Einstellung zu optimieren, werden auch pneumatische Schaltventile mit unterschiedlichen Durchlassquerschnitten zur Drucksteuerung im Aktuator parallel zueinander geschaltet. Derartige Systeme sind z.B. von der Firma Knorr-Bremse Systeme für Nutzfahrzeuge GmbH ("Knorr"), München, Deutschland erhältlich.

Der getaktete Betrieb der pneumatischen Schaltventile bedingt indes zum einen, dass diese im Laufe ihres Einsatzes sehr häufig angesteuert werden - in der Praxis erfolgt z.B. eine Auslegung der pneumatischen Schaltventile auf mehrere hundert Millionen Betätigungen, was natürlich eine entsprechend robuste, aufwendige Ausgestaltung der Schaltventile erfordert. Zum anderen geht mit dem getakteten Betrieb der pneumatischen Schaltventile, d.h. mit dem ständigen Wechsel von Be- und Entlüftung ein im Verhältnis hoher Druckluftverbrauch einher, was im Hinblick auf die Energieeffizienz ungünstig ist. Nicht zuletzt bedingt die Integration der pneumatischen Schaltventile, d.h. der Einlass- und Auslassmagnetventile im Aktuator, wie dies z.B. bei den Systemen der Firma Knorr der Fall ist, dass der Aktuator sowohl in radialer Richtung als auch in axialer Richtung einen relativ großen Bauraum beansprucht. Der zur Verfügung stehende Einbauraum ist am bzw. im Getriebegehäuse in der Regel jedoch eher knapp bemessen.

Im Stand der Technik wurde ferner schon vorgeschlagen - siehe z.B. die Druckschriften DE 10 2011 078 820 A1 oder DE 10 2010 022 747 A1 - zur Verbesserung der Feinfühligkeit (Genauigkeit und Stellgeschwindigkeit) bei der Positionseinstellung mit einem pneumatischen Stellzylinder einen Hydraulikzylinder zu dem pneumatischen Stellzylinder mechanisch in Reihe zu schalten. Hierbei dient der Hydraulikzylinder jeweils dazu, die Bewegung des Kolbens des pneumatischen Stellzylinders zu bremsen bzw. zu dämpfen.

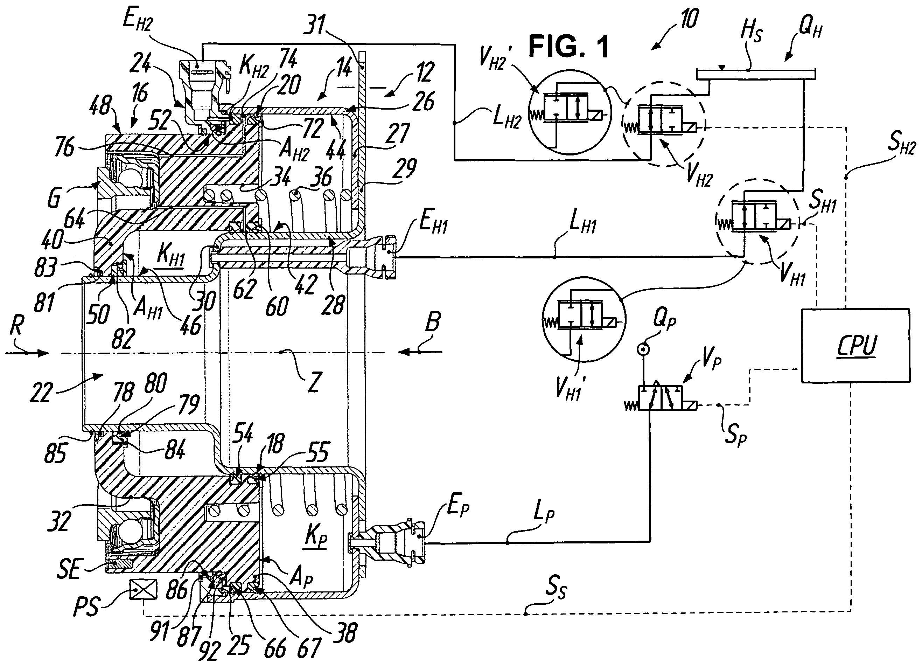

Genauer gesagt weist gemäß der Druckschrift DE 10 2011 078 820 A1 (Fig. 1) ein mittels eines Positionssensors wegsensierter, pneumatisch angetriebener Stellantrieb einen beidseitig pneumatisch druckbeaufschlagbaren Pneumatikkolben mit einer Kolbenstange auf. Auf einer gemeinsamen Achse hinter dem pneumatischen Stellantrieb sitzt ein doppeltwirkender Hydraulikzylinder, der einen zwei Hydraulikräume im Hydraulikzylinder trennenden Hydraulikkolben mit einer Kolbenstange auf einer Seite hat. Zur hydraulischen Dämpfung der mittels des pneumatischen Stellantriebs bewirkten Stellbewegungen sind die Kolbenstange des Pneumatikkolbens und die Kolbenstange des Hydraulikkolbens miteinander gekoppelt. Dabei kann der Pneumatikkolben durch geeignete, vom Wegsignal des Positionssensors abhängige Ansteuerung eines Proportionalventils, das sich in einer die beiden Hydraulikräume des Hydraulikzylinders verbindenden Hydraulikleitung befindet, definiert gebremst oder festgesetzt werden.

Bei diesem Stand der Technik ist im Hydraulikzylinder ferner ein weiterer, ebenfalls verschieblicher Kolben angeordnet, welcher im Hydraulikzylinder eine weitere Kammer von dem Hydraulikraum trennt, der auf der vom pneumatischen Stellantrieb abgewandten Seite des Hydraulikkolbens liegt. In dieser weiteren Kammer ist Gas unter erhöhtem Druck eingeschlossen, welches dazu dient, bei einer Bewegung des Hydraulikkolbens unterschiedliche Volumenänderungen in den beiden Hydraulikräumen, die sich aus den beiden, von Seite zu Seite verschiedenen hydraulischen Wirkflächen des Hydraulikkolbens ergeben (ganzer Kolbenquerschnitt auf der einen Seite, Kolbenquerschnitt minus Kolbenstangenquerschnitt auf der anderen Seite), sowie eine Wärmedehnung der Hydraulikflüssigkeit auszugleichen. Der weitere Kolben und die weitere Kammer im Hydraulikzylinder bilden also eine Kompensationseinheit, deren Wirkungsweise der Wirkungsweise eines Einrohrdämpfers entspricht. Eine solche Hintereinanderanordnung von Kolben und Räumen bzw. Kammern hat allerdings einen erheblichen axialen Bauraumbedarf.

Beim Stand der Technik gemäß der Druckschrift DE 10 2010 022 747 A1 (Fig. 1) hingegen hat ein pneumatisch angetriebener Stellzylinder einen Pneumatikkolben, der auf einer Seite über eine Druckluftkammer mit Druckluft beaufschlagbar ist und auf der anderen Seite über eine Gegenkraft einer Fahrzeugkupplung beaufschlagt wird. Mittels einer Kolbenstange ist der Pneumatikkolben mit einem Hydraulikkolben eines doppeltwirkenden Hydraulikzylinders gekoppelt, der an einem Gehäuse des pneumatischen Stellzylinders angeflanscht bzw. angeschraubt ist und zwei Druckkammern aufweist. Die beiden Druckkammern des Hydraulikzylinders sind über eine Leitung mit einer Drossel und einem zu dieser in Reihe geschalteten Schaltventil (2/2-Wege-Ventil) miteinander verbunden. Ist das Schaltventil geschlossen, so soll der Hydraulikzylinder eine Bewegung des Pneumatikkolbens blockieren. Wird das Schaltventil hingegen geöffnet, so soll sich der Pneumatikkolben bewegen können, und zwar nach Maßgabe des festen Drosselquerschnitts der Drossel gebremst bzw. gedämpft.

Das Dämpfungs- bzw. Bremsverhalten ist hier indes nicht einstellbar. Auch ist keine Kompensationseinheit wie im oben beschriebenen Stand der Technik vorgesehen, so dass der hydraulische Bereich dieser Anordnung erhebliche "Weichheiten" (wie Lufteinschlüsse od.dgl.) aufweisen müsste, um überhaupt eine Bewegung zuzulassen. Schließlich gelten insbesondere die obigen Anmerkungen zum axialen Bauraumbedarf bei diesem Stand der Technik entsprechend.

Des Weiteren offenbaren die Druckschriften EP 1 630 439 A1 und DE 10 2014 102 880 A1 hydraulisch betätigte Aktuatoren für eine Kupplungsbetätigung, mit einem Kolben, der mit einem Zylindergehäuse einen hydraulischen und einen pneumatischen Druckraum definiert. Diese Druckräume sind kolbenseitig durch in gleiche Richtung wirkende Wirkflächen begrenzt, wobei der Druck im pneumatischen Druckraum über den Druck im hydraulischen Druckraum gesteuert wird, um die hydraulisch aufgebrachte Kraft pneumatisch zu verstärken. Ein ähnlicher Aktuator zur kombinierten pneumatischen und hydraulischen Betätigung einer Reibkupplung ist schließlich der Druckschrift CN 201 137 653 Y zu entnehmen.

### AUFGABENSTELLUNG

Dem oben geschilderten Stand der Technik gegenüber liegt der Erfindung die Aufgabe zugrunde, einen tunlichst einfach ausgebildeten Aktuator, insbesondere Nehmerzylinder für eine Vorrichtung zur Kupplungsbetätigung in einem Kraftfahrzeug zu schaffen, welcher die angesprochenen Nachteile vermeidet und - verglichen zum obigen Stand der Technik - insbesondere kompakter baut.

### DARSTELLUNG DER ERFINDUNG

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 9.

Gemäß der Erfindung hat ein Aktuator, insbesondere Nehmerzylinder, für eine Vorrichtung zur Kupplungsbetätigung in einem Kraftfahrzeug ein einen pneumatischen Druckanschluss und wenigstens einen hydraulischen Druckanschluss aufweisendes Zylindergehäuse, in dem ein mit einem Stellglied mechanisch wirkverbundener Kolben längsverschieblich aufgenommen ist, der zusammen mit dem Zylindergehäuse einen über den pneumatischen Druckanschluss druckbeaufschlagbaren Pneumatikraum und wenigstens einen mit dem hydraulischen Druckanschluss verbundenen Hydraulikraum definiert, die vermittels einer Dichtungsanordnung voneinander getrennt sind, wobei an dem Kolben eine den Pneumatikraum axial begrenzende pneumatische Wirkfläche und wenigstens eine den Hydraulikraum axial begrenzende, zur pneumatischen Wirkfläche entgegengesetzt ausgerichtete hydraulische Wirkfläche ausgebildet sind, so dass durch Druckbeaufschlagung des Pneumatikraums das Stellglied über den Kolben in einer Betätigungsrichtung gegen eine in einer Rückstellrichtung wirkende, äußere Rückstellkraft längsverschiebbar und eine Kolbenbewegung durch - passiven oder aktiven, zumindest entgegen der Richtung der pneumatischen Druckbeaufschlagung wirkenden - Druckaufbau in dem wenigstens einen Hydraulikraum kontrollierbar ist.

Durch Vorsehen der pneumatischen und hydraulischen Wirkflächen an ein und demselben Kolben in ein und demselben Zylindergehäuse ergibt sich gegenüber dem eingangs geschilderten Stand der Technik zunächst vorteilhaft eine geringere axiale Baulänge des Aktuators. Verglichen zu einer Lösung, bei der zwei (oder mehr) in Reihe hintereinander angeordnete Gehäuse aneinander geflanscht sind, werden ferner erfindungsgemäß statische Überbestimmungen zuverlässig vermieden, die im Stand der Technik bei nicht sehr genau zentrierten Gehäusen zu einem Klemmen der / einer erhöhten Reibung an den bewegten Teile/n führen können. Zudem ergibt sich erfindungsgemäß durch Entfall von Dichtungen zwischen verschiedenen Gehäusen ein geringerer Dichtungsaufwand.

Werden in einem Anwendungsfall des Aktuators nicht nur eine, sondern zwei entgegengesetzte hydraulische Wirkflächen benötigt, um Stellbewegungen in zwei unterschiedlichen Richtungen zu kontrollieren, ist insbesondere im Hinblick auf einen geringen Bauraumbedarf und Aufwand eine Ausgestaltung bevorzugt, bei der das Zylindergehäuse zwei hydraulische Druckanschlüsse aufweist und zusammen mit dem Kolben neben dem Pneumatikraum zwei Hydraulikräume definiert, die mit jeweils einem der hydraulischen Druckanschlüsse verbunden sind und vermittels zwei Dichtungsanordnungen voneinander und von dem Pneumatikraum getrennt sind, wobei an dem Kolben neben der pneumatischen Wirkfläche zwei jeweils einen der Hydraulikräume axial begrenzende hydraulische Wirkflächen einander entgegengesetzt ausgebildet sind, so dass eine Bewegung des Kolbens durch Druckaufbau in einem ersten der Hydraulikräume in der Rückstellrichtung kontrolliert bremsbar ist und durch Druckaufbau in einem zweiten der Hydraulikräume in der Betätigungsrichtung kontrolliert bremsbar ist.

Eine besonders kurze Baulänge des Aktuators lässt sich erzielen, wenn das Zylindergehäuse und der Kolben zur Ausbildung des wenigstens einen Hydraulikraums und der diesen begrenzenden hydraulischen Wirkfläche umfangsseitig gestuft geformt sind.

Für eine sehr getriebenahe, platzsparende sowie reibungs- und verschleißarme Anordnung kann der Aktuator des Weiteren in der Art eines Zentralausrückers ausgebildet sein, wobei das Zylindergehäuse im Bereich einer Mittelachse einen Durchgang für eine Getriebewelle besitzt und der im Zylindergehäuse längsverschieblich aufgenommene Kolben ein Ringkolben ist, der ein Ausrücklager als Stellglied trägt.

Dabei können im Zylindergehäuse prinzipiell zwei Hydraulikräume hintereinander am Außenumfang oder am Innenumfang des Ringkolbens und der Pneumatikraum an einer Stirnseite des Ringkolbens ausgebildet sein. Im Hinblick auf eine besonders kurze axiale Baulänge bevorzugt ist indes eine Ausgestaltung, bei der einer der Hydraulikräume am Außenumfang des Ringkolbens und ein anderer der Hydraulikräume am Innenumfang des Ringkolbens ausgebildet ist, während der Pneumatikraum bezüglich des Ringkolbens stirnseitig liegt.

Soll der Aktuator mit einer Umlenkung bzw. Übersetzung über z.B. einen Kupplungshebel mit der Kupplung in Wirkverbindung stehen, bietet sich in einer Alternative eine Ausgestaltung als Aktuator an, der in der Art eines Kupplungsnehmerzylinders mit zentraler Sackbohrung im Zylindergehäuse ausgebildet ist, in welcher der Kolben längsverschieblich aufgenommen ist, der betätigungswirksam mit einer mittigen Kolbenstange als Stellglied verbunden ist. Ein solcher Aktuator ist verglichen zu einem Zentralausrücker hinsichtlich des Orts der Anbringung flexibler, wird thermisch weniger stark belastet, ist leichter austauschbar und auch nicht dem Kupplungsabrieb ausgesetzt.

In zweckmäßiger, einfacher Ausgestaltung eines solchen Aktuators können beide Hydraulikräume axial hintereinander liegend am Außenumfang des Kolbens ausgebildet sein, während der Pneumatikraum bezüglich des Kolbens stirnseitig liegt.

In einer hinsichtlich der Baulänge kürzeren Alternative des Aktuators mit Kolbenstange kann der Kolben eine zentrale Vertiefung aufweisen, in die ein am Zylindergehäuse vorgesehener, zentraler Vorsprung eintaucht, wobei einer der Hydraulikräume zwischen dem Vorsprung des Zylindergehäuses und der Vertiefung des Kolbens ausgebildet ist und sich ein anderer der Hydraulikräume am Außenumfang des Kolbens befindet, während der Pneumatikraum bezüglich des Kolbens stirnseitig liegt.

In einer vorteilhaften Weiterbildung der vorbeschriebenen, verschiedenen Aktuatoren kann schließlich wenigstens die den Pneumatikraum vom jeweiligen Hydraulikraum trennende Dichtungsanordnung zwei axial voneinander beabstandete Dichtelemente mit einem Zwischenraum dazwischen aufweisen, der über einen Ausgleichskanal mit der Umgebung verbunden ist. Während bei dieser Ausgestaltung über die Hydraulikdichtung auch eine gewisse Schmierung der Pneumatikdichtung erzielt werden kann, dient der Ausgleichskanal insbesondere dazu, zu verhindern, dass von der Pneumatikseite Luft in das hydraulische System gelangt.

### KURZE BESCHREIBUNG DER ZEICHNUNGEN

Im Folgenden wird die Erfindung anhand bevorzugter Ausführungsbeispiele unter Bezugnahme auf die beigefügten, teilweise schematischen Zeichnungen näher erläutert, wobei gleiche oder entsprechende Teile mit den gleichen Bezugszeichen - ggf. mit hochgestellten Strichen (' bzw. ") zur Kennzeichnung der jeweiligen Ventil- bzw. Aktuatorvariante ergänzt - versehen wurden und zur Vereinfachung der Darstellung elastomere bzw. elastische Teile im unverformten Zustand dargestellt sind. In den Zeichnungen zeigen:
- Fig. 1: ein Schaltbild einer Vorrichtung zur Betätigung einer Kupplung in einem Kraftfahrzeug als erstes Ausführungsbeispiel, mit einem in einer Längsschnittansicht dargestellten Aktuator gemäß einer erfindungsgemäßen ersten Variante, der in der Art eines Zentralausrückers ausgebildet ist und sich in einer federvorgespannten Grundstellung befindet, wobei Druckräume des Aktuators über ein 3/2-Wege-Schaltventil mit einer Druckluftquelle bzw. über zwei 2/2-Wege-Proportionalventile mit einem Vorratsbehälter für Hydraulikfluid verbunden sind;

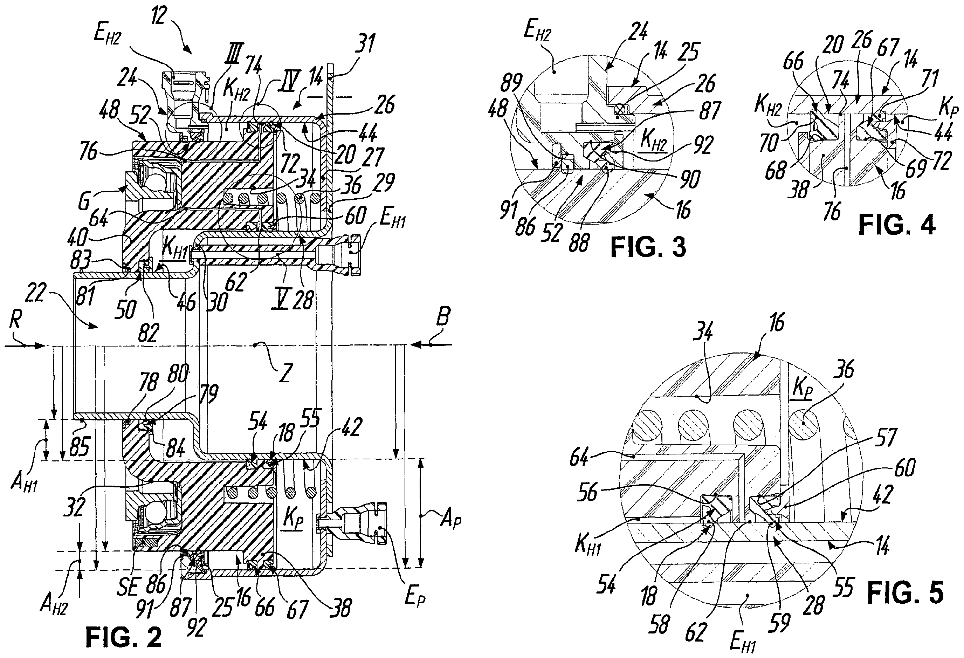

- Fig. 2: eine Längsschnittansicht des Aktuators gemäß Fig. 1, dessen Kolben sich gegenüber dem in Fig. 1 gezeigten Zustand in einer bezüglich eines Zylindergehäuses des Aktuators verschobenen Stellung befindet, um die Druckräume und Wirkflächen des Aktuators besser zu veranschaulichen;
- Fig. 3: eine vergrößerte Teilschnittansicht des Aktuators gemäß Fig. 1 entsprechend dem Detailkreis III in Fig. 2, zur Veranschaulichung der Dichtsituation zwischen einem hydraulischen Druckraum des Aktuators und der Umgebung;
- Fig. 4: eine vergrößerte Teilschnittansicht des Aktuators gemäß Fig. 1 entsprechend dem Detailkreis IV in Fig. 2, zur Veranschaulichung der Dichtsituation zwischen dem hydraulischen Druckraum und einem pneumatischen Druckraum des Aktuators;
- Fig. 5: eine vergrößerte Teilschnittansicht des Aktuators gemäß Fig. 1 entsprechend dem Detailkreis V in Fig. 2, zur Veranschaulichung der Dichtsituation zwischen dem pneumatischen Druckraum und einem weiteren hydraulischen Druckraum des Aktuators;

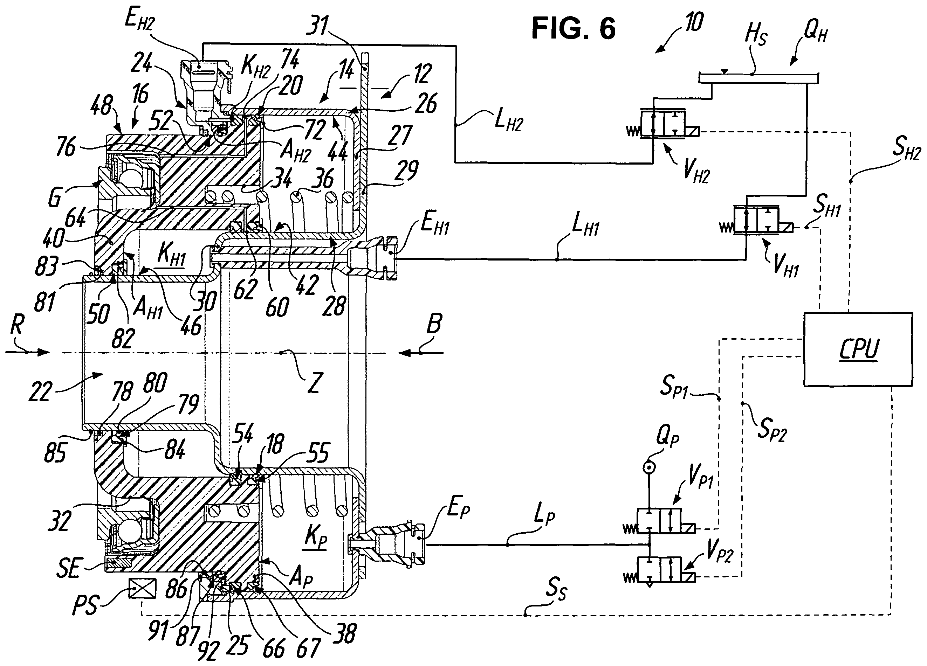

- Fig. 6: ein Schaltbild einer Vorrichtung zur Betätigung einer Kupplung in einem Kraftfahrzeug als zweites Ausführungsbeispiel, wiederum mit dem in einer Längsschnittansicht dargestellten erfindungsgemäßen Aktuator von Fig. 1, wobei der pneumatische Druckraum des Aktuators anders als in Fig. 1 über zwei 2/2-Wege-Schaltventile mit der Druckluftquelle bzw. der Umgebung verbunden ist;

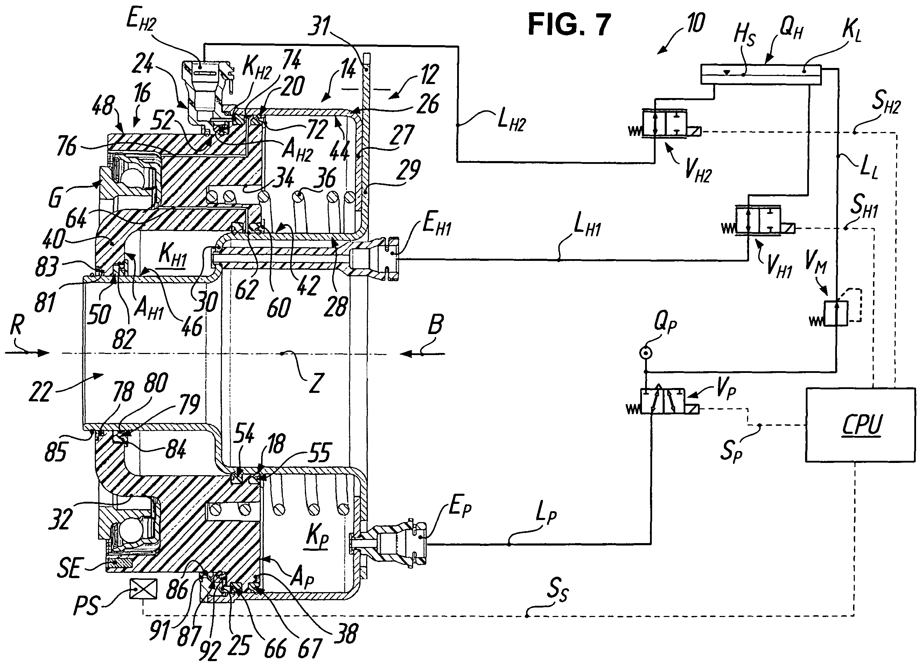

- Fig. 7: ein Schaltbild einer Vorrichtung zur Betätigung einer Kupplung in einem Kraftfahrzeug als drittes Ausführungsbeispiel, erneut mit dem in einer Längsschnittansicht dargestellten erfindungsgemäßen Aktuator gemäß Fig. 1, wobei im Gegensatz zu Fig. 1 eine oberhalb eines Flüssigkeitsspiegels im geschlossen ausgebildeten Vorratsbehälter für Hydraulikfluid vorhandene Luftkammer über ein Druckminderventil an die Druckluftquelle angeschlossen ist;

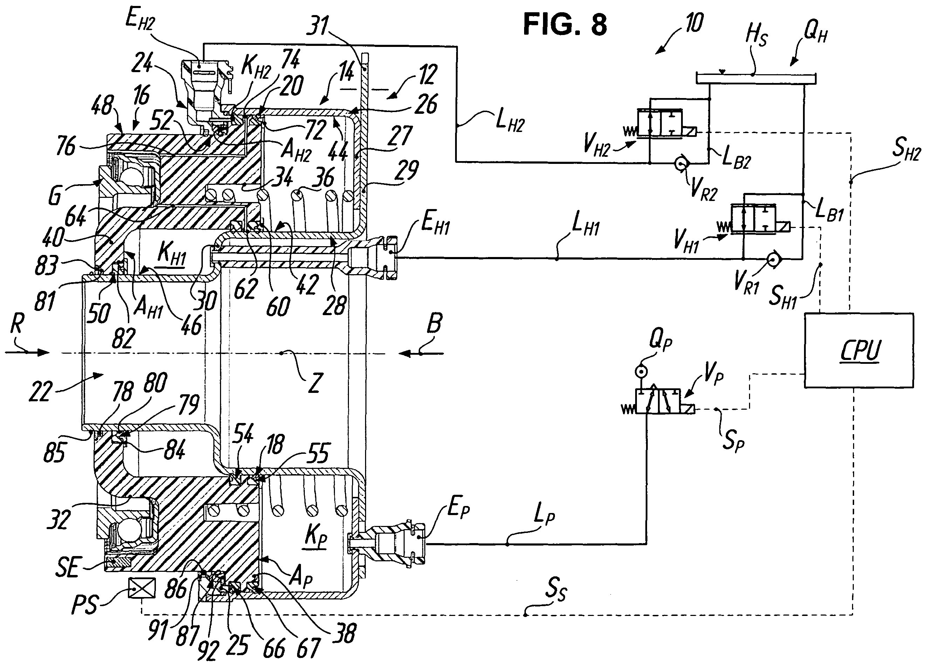

- Fig. 8: ein Schaltbild einer Vorrichtung zur Betätigung einer Kupplung in einem Kraftfahrzeug als viertes Ausführungsbeispiel, wiederholt mit dem in einer Längsschnittansicht dargestellten erfindungsgemäßen Aktuator von Fig. 1, wobei entgegen Fig. 1 zu jedem 2/2-Wege-Proportionalventil eine Bypass-Leitung mit einem Bypass-Rückschlagventil parallel geschaltet ist, das in einer Richtung vom Aktuator zum Vorratsbehälter hin sperrt;

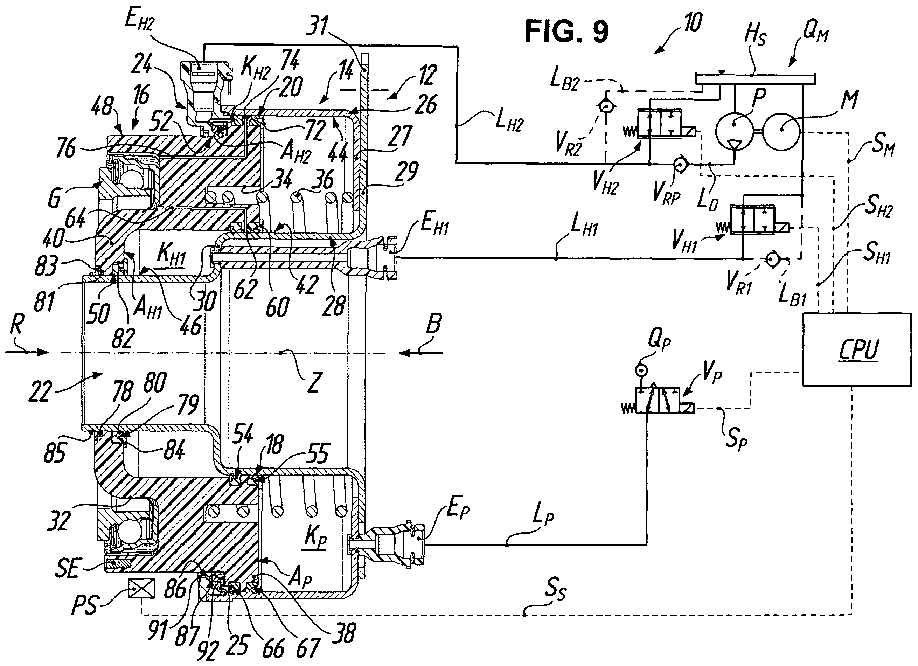

- Fig. 9: ein Schaltbild einer Vorrichtung zur Betätigung einer Kupplung in einem Kraftfahrzeug als fünftes Ausführungsbeispiel, nochmals mit dem in einer Längsschnittansicht dargestellten erfindungsgemäßen Aktuator gemäß Fig. 1, wobei - ggf. in Ergänzung zu den Bypass-Maßnahmen von Fig. 8 (hier gestrichelt dargestellt) - zur aktiven hydraulischen Druckbeaufschlagung des Aktuators parallel zu einem der 2/2-Wege-Proportionalventile eine Pumpenleitung mit einer elektromotorisch angetriebenen Hydraulikpumpe und einem pumpenausgangsseitig vorgesehenen, zur Hydraulikpumpe hin sperrenden Pumpen-Rückschlagventil geschaltet ist;

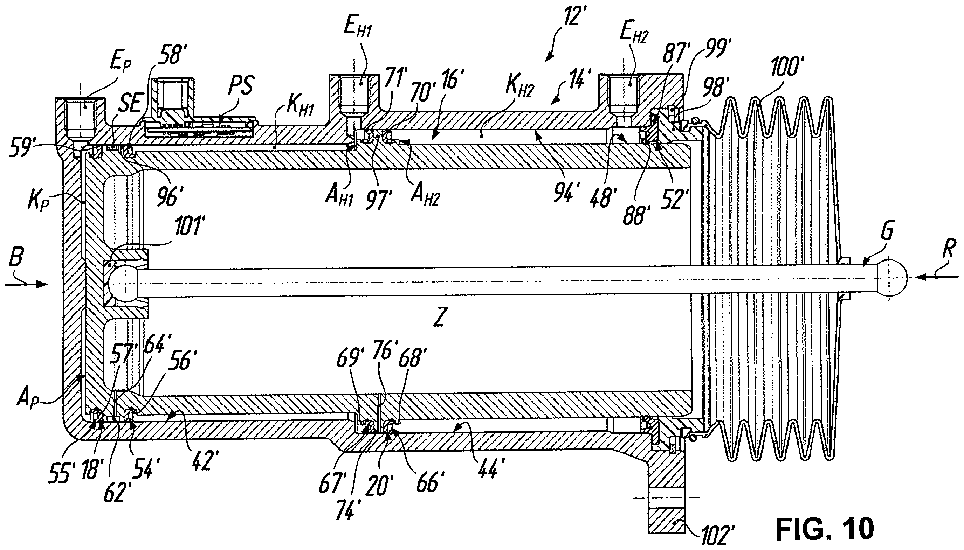

- Fig. 10: eine Längsschnittansicht eines Aktuators gemäß einer erfindungsgemäßen zweiten Variante, der bei jeder der Vorrichtungen gemäß den ersten bis fünften Ausführungsbeispielen nach den Fig. 1 und 6 bis 9 zum Einsatz kommen kann, in der Art eines Kupplungsnehmerzylinders mit zentraler Sackbohrung im Zylindergehäuse ausgebildet und in einer Grundstellung gezeigt ist, wobei zwei Hydraulikräume axial hintereinander liegend am Außenumfang des Kolbens vorgesehen sind und der Pneumatikraum bezüglich des Kolbens stirnseitig liegt;

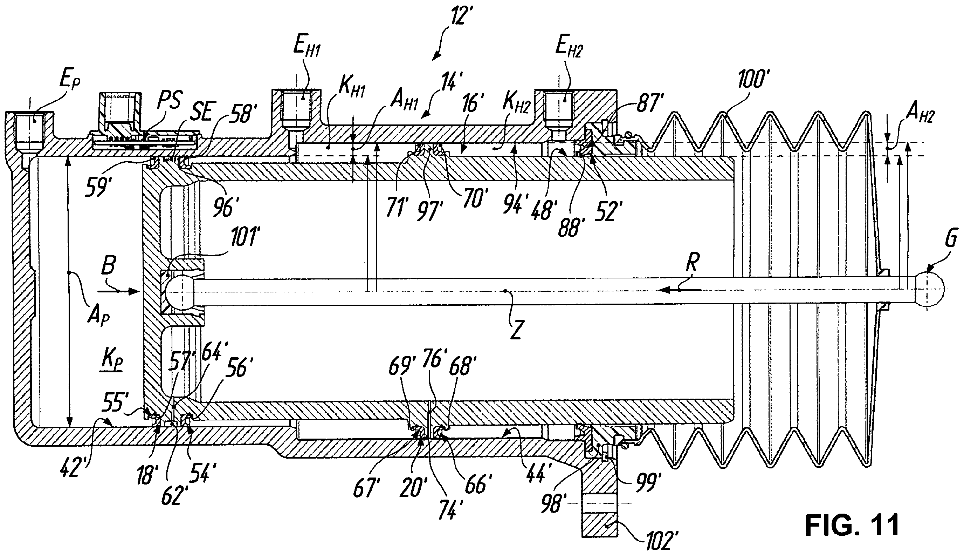

- Fig. 11: eine Längsschnittansicht des Aktuators gemäß der erfindungsgemäßen zweiten Variante nach Fig. 10, dessen Kolben sich gegenüber dem in Fig. 10 dargestellten Zustand in einer bezüglich des Zylindergehäuses des Aktuators verschobenen Stellung befindet, um die Druckräume und Wirkflächen des Aktuators besser zu veranschaulichen; und

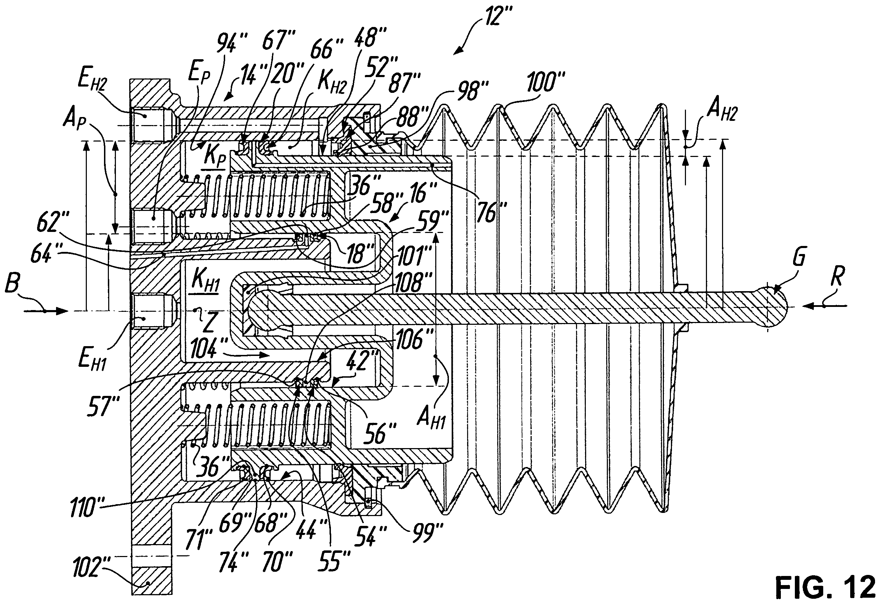

- Fig. 12: eine Längsschnittansicht eines Aktuators gemäß einer erfindungsgemäßen dritten Variante, der ebenfalls bei jeder der Vorrichtungen gemäß den ersten bis fünften Ausführungsbeispielen nach den Fig. 1 und 6 bis 9 zum Einsatz kommen kann und in einer Betriebsstellung gezeigt ist, wobei - anders als bei dem Aktuator gemäß der zweiten Variante nach Fig. 11 - der Kolben des Aktuators eine Vertiefung hat, in die ein am Zylindergehäuse vorgesehener Vorsprung eintaucht, so dass einer der Hydraulikräume zwischen dem Vorsprung und der Vertiefung ausgebildet ist und sich ein anderer der Hydraulikräume am Außenumfang des Kolbens befindet, während der Pneumatikraum bezüglich des Kolbens stirnseitig liegt.

In den Zeichnungen und in der folgenden Beschreibung wurde auf eine Darstellung bzw. Erläuterung der jeweiligen Kupplung und der Art und Weise, wie das jeweilige Stellglied am Aktuator - Ausrücklager bei der ersten Aktuatorvariante, Kolbenstange bei der zweiten und dritten Aktuatorvariante - mit der Kupplung in Wirkverbindung steht, verzichtet, weil diesbezügliche Merkmale dem Fachmann in struktureller und funktionaler Hinsicht geläufig und weitere Ausführungen hierzu für das Verständnis der vorliegenden Erfindung nicht erforderlich sind. Ebenso ist bei allen Aktuatorvarianten der jeweilige Kolben gegen ein Verdrehen im Zylindergehäuse gesichert, was indes nicht eigens dargestellt wurde, da diese Maßnahmen an sich bekannt sind.

### DETAILLIERTE BESCHREIBUNG DER AUSFÜHRUNGSBEISPIELE

In Fig. 1 beziffert das Bezugszeichen 10 allgemein eine Vorrichtung zur Betätigung einer Kupplung (nicht dargestellt) in einem Kraftfahrzeug. Die Betätigung der Kupplung erfolgt hierbei unter Erzeugung einer linearen Stellbewegung in einer Betätigungsrichtung entsprechend dem Pfeil B (also nach links in Fig. 1) gegen eine Rückstellkraft, die in einer entgegengesetzten Rückstellrichtung entsprechend dem Pfeil R (demnach nach rechts in Fig. 1) wirkt und in der Regel durch eine oder mehrere Kupplungsfedern (nicht gezeigt) generiert wird.

Die Vorrichtung 10 umfasst zur Erzeugung der Stellbewegung zunächst einen Aktuator 12, der ein Zylindergehäuse 14 und einen darin längsverschieblich aufgenommenen Kolben 16 aufweist, die zusammen verschiedene Druckräume und unterschiedliche Wirkflächen im Aktuator 12 definieren. So hat der Aktuator 12 einen von einer pneumatischen Wirkfläche Ap begrenzten Pneumatikraum Kp, der von einer Druckluftquelle Q_{P} wahlweise mit einem pneumatischen Druck beaufschlagt werden kann, um an der pneumatischen Wirkfläche Ap eine Kraft in der Betätigungsrichtung B zu generieren. Ferner besitzt der Aktuator 12 einen ersten Hydraulikraum K_{H1} , der über ein elektromagnetisch betätigbares, erstes 2/2-Wege-Proportionalventil V_{H1} mit einem Vorratsbehälter Q_{H} für Hydraulikfluid hydraulisch verbunden werden kann und von einer bezüglich der pneumatischen Wirkfläche Ap gleich gerichteten, ersten hydraulischen Wirkfläche A_{H1} begrenzt ist (siehe auch Fig. 2). Des Weiteren weist der Aktuator 12 einen zweiten Hydraulikraum K_{H2} auf, der über ein elektromagnetisch betätigbares, zweites 2/2-Wege-Proportionalventil V_{H2} hydraulisch mit dem Vorratsbehälter Q_{H} verbunden werden kann und von einer zur pneumatischen Wirkfläche Ap sowie zur ersten hydraulischen Wirkfläche A_{H1} entgegengesetzten, zweiten hydraulischen Wirkfläche A_{H2} begrenzt ist (vgl. wiederum auch Fig. 2). Über die vorgenannten Wirkflächen A_{P}, A_{H1}, A_{H2}, die den jeweiligen Raum Kp, K_{H1}, K_{H2} im Aktuator 12 jeweils axial begrenzen und hier sämtlich am Kolben 16 ausgebildet sind, kann ein mit dem Kolben 16 wirkverbundenes Stellglied G des Aktuators 12 auf noch näher zu beschreibende Weise kraftbeaufschlagt und definiert bewegt werden. Im dargestellten Ausführungsbeispiel handelt es sich bei dem Stellglied G um ein an sich bekanntes, am Kolben 16 angebrachtes Ausrücklager, das in hier nicht gezeigter, ebenfalls an sich bekannter Weise mit der Kupplung betätigungswirksam verbunden ist.

Für die obige Verschaltung des Aktuators 12 in der Vorrichtung 10 weist weiterhin das Zylindergehäuse 14 einen pneumatischen Druckanschluss E_{P}, über den der Pneumatikraum K_{P} druckbeaufschlagbar ist, und zwei hydraulische Druckanschlüsse E_{H1}, E_{H2} auf, die jeweils mit einem der Hydraulikräume K_{H1}, K_{H2} verbunden sind. Letztere sind, wie noch im Detail erläutert werden wird, vermittels zwei Dichtungsanordnungen 18, 20 voneinander und von dem Pneumatikraum K_{P} getrennt.

Darüber hinaus besitzt die Vorrichtung 10 eine elektronische Steuerung CPU, mittels der die Druckbeaufschlagung des Pneumatikraums K_{P} und Ventilstellungen der ersten und zweiten 2/2-Wege-Proportionalventile V_{H1}, V_{H2} unabhängig voneinander gesteuert werden können, wie nachfolgend noch im Einzelnen beschrieben werden wird. Hierbei ist allgemein durch Schließen des ersten 2/2-Wege-Proportionalventils V_{H1} über die erste hydraulische Wirkfläche A_{H1} eine Bewegung des Stellglieds G in der Rückstellrichtung R kontrolliert bremsbar, während eine Bewegung des Stellglieds G in der Betätigungsrichtung B durch Schließen des zweiten 2/2-Wege-Proportionalventils V_{H2} über die zweite hydraulische Wirkfläche A_{H2} kontrolliert gebremst werden kann.

Zur Druckbeaufschlagung des Pneumatikraums Kp des Aktuators 12 ist der pneumatische Druckanschluss E_{P} am Zylindergehäuse 14 über eine Pneumatikleitung L_{P} an der Druckluftquelle Q_{P} angeschlossen. Dabei ist zwischen der Druckluftquelle Q_{P} und dem Pneumatikraum K_{P} des Aktuators 12 ein federvorgespanntes, elektromagnetisch betätigbares 3/2-Wege-Schaltventil V_{P} vorgesehen, welches in der Pneumatikleitung Lp angeordnet ist. Das 3/2-Wege-Schaltventil V_{P} kann über eine elektrische Steuerleitung Sp mittels der Steuerung CPU angesteuert werden. Hierbei verbindet das 3/2-Wege-Schaltventil V_{P} im durch die Steuerung CPU angesteuerten Zustand die Druckluftquelle Q_{P} mit dem Pneumatikraum Kp des Aktuators 12 und im nicht durch die Steuerung CPU angesteuerten Zustand den Pneumatikraum K_{P} des Aktuators 12 mit der Umgebung (in Fig. 1 durch das Dreieck oben am 3/2-Wege-Schaltventil V_{P} angedeutet).

Was die hydraulische Verschaltung des Aktuators 12 in der Vorrichtung 10 angeht, sind dessen Druckanschlüsse E_{H1}. E_{H2} über je eine Hydraulikleitung L_{H1}, L_{H2} an den Vorratsbehälter Q_{H} angeschlossen. Die vorerwähnten 2/2-Wege-Proportionalventile V_{H1}, V_{H2} sitzen hierbei jeweils in einer der Hydraulikleitungen L_{H1}, L_{H2} und sind über je eine elektrische Steuerleitung S_{H1}, S_{H2} mit der Steuerung CPU verbunden. In einer ersten Ventilalternative - in Fig. 1 jeweils mit einer gestrichelten Linie eingekreist - sind die 2/2-Wege-Proportionalventile V_{H1}, V_{H2} im nicht durch die Steuerung CPU angesteuerten Zustand in Durchgangs-Null-Stellung federvorgespannt, um den jeweiligen Hydraulikraum K_{H1}, K_{H2} des Aktuators 12 mit dem Vorratsbehälter Q_{H} für Hydraulikfluid zu verbinden. Ohne Strom sind die Hydraulikräume K_{H1}, K_{H2} des Aktuators 12 bei dieser Ventilalternative also drucklos.

Vom Aufbau her können die 2/2-Wege-Proportionalventile V_{H1}, V_{H2} beispielsweise als elektromagnetisch betätigbare, im nicht angesteuerten Zustand in Durchgangs-Null-Stellung federvorgespannte 2/2-Kugelsitzventile ausgebildet sein, wie sie prinzipiell aus der Druckschrift DE 196 33 420 A1 der vorliegenden Anmelderin bekannt sind. Bei diesen Ventilen ist zwischen einer Druckkammer und einer Ablaufkammer eines Ventilgehäuses ein Kugelsitz für einen kugelförmigen Ventilkörper angeordnet, welcher in der Ablaufkammer aufgenommen ist. Eine in der Druckkammer angeordnete Ventilfeder drückt den Ventilkörper vom Kugelsitz weg, während auf der von der Druckkammer abgewandten Seite ein Magnetantrieb vorgesehen ist, mittels dessen der Ventilkörper in Richtung des Kugelsitzes gedrückt werden kann. Nach Maßgabe der Bestromung des Magnetantriebs stellt sich zwischen dem Ventilkörper und dem Ventilsitz ein vornehmlich ringförmiger Drosselspalt von vorbestimmter Größe ein, welcher einem Durchfluss des Hydraulikfluids von der Druckkammer zur Ablaufkammer größenabhängig mehr oder weniger Widerstand entgegensetzt, der den Druck in der Druckkammer erhöht (Staudruckprinzip). Während im vorliegenden Anwendungsfall eines solchen Ventils die Drucckammer an den entsprechenden Druckanschluss E_{H1} bzw. E_{H2} des Aktuators 12 angeschlossen ist, ist die Ablaufkammer des Ventils mit dem Vorratsbehälter Q_{H} für Hydraulikfluid verbunden.

In einer zweiten Ventilalternative - in Fig. 1 jeweils neben der dort vorgesehenen Verschaltung mit einer durchgezogenen Linie eingekreist - kann die Ausgestaltung jedoch auch so getroffen sein, dass die 2/2-Wege-Proportionalventile V_{H1}', V_{H2}' im nicht durch die Steuerung CPU angesteuerten Zustand in Sperr-Null-Stellung federvorgespannt sind, um den jeweiligen Hydraulikraum K_{H1}, K_{H2} des Aktuators 12 von dem Vorratsbehälter Q_{H} für Hydraulikfluid zu trennen. Fällt die Ventilbestromung bei dieser Ventilalternative weg oder wird sie ausgeschaltet, so wird der hydraulische Betätigungszustand des Aktuators 12 aufrechterhalten bzw. "eingefroren". In Ausgestaltung als 2/2-Kugelsitzventil wären bei der zweiten Ventilalternative gegenüber dem oben beschriebenen Aufbau lediglich die Ventilfeder und der Magnetantrieb vertauscht, d.h. auf bezüglich des Ventilkörpers anderen Seiten angeordnet, wobei die Ventilfeder kräftemäßig so ausgelegt werden würde, dass sie den im System auftretenden maximalen Hydraulikdruck am Ventilkörper gegenzuhalten vermag.

Zum schematischen Schaltbild der Vorrichtung 10 gemäß Fig. 1 ist schließlich noch anzumerken, dass am bzw. im Aktuator 12 eine Sensoranordnung vorgesehen ist, mit einem bezüglich des Zylindergehäuses 14 ortsfesten Positionssensor PS, bei dem es sich beispielsweise um einen Hallsensor handeln kann, und einem am Kolben 16 angebrachten Signalelement SE, etwa in der Form eines Magneten, der z.B. in einer stirnseitig vorgesehenen Kolbenaussparung aufgenommen ist, wie in Fig. 1 gezeigt. Der Positionssensor PS ist hierbei über eine Signalleitung Sₛ mit der Steuerung CPU verbunden. Mit Hilfe dieser Sensoranordnung kann in an sich bekannter Weise der Hub bzw. Weg des Kolbens 16 im Zylindergehäuse 14 des Aktuators 12 erfasst werden.

Weitere Einzelheiten des bei den Ausführungsbeispielen gemäß den Fig. 1 und 6 bis 9 in der Art eines Zentralausrückers ausgebildeten Aktuators 12 sind insbesondere den Fig. 2 bis 5 zu entnehmen. Demgemäß besitzt das Zylindergehäuse 14 im Bereich einer Mittelachse Z einen zentralen Durchgang 22 für eine Getriebewelle (nicht gezeigt), wobei der im Zylindergehäuse 14 längsverschieblich aufgenommene Kolben ein Ringkolben 16 ist, der als Stellglied G, wie schon erwähnt, ein an sich bekanntes Ausrücklager zum Angriff an der Kupplung (nicht dargestellt) trägt. Wie nachfolgend noch näher beschrieben werden wird, sind hierbei das Zylindergehäuse 14 und der Ringkolben 16 des Aktuators 12 zur Ausbildung der zwei Hydraulikräume K_{H1}, K_{H2} und der diese begrenzenden hydraulischen Wirkflächen A_{H1}, A_{H2} umfangsseitig gestuft geformt.

Das Zylindergehäuse 14 besteht im dargestellten Ausführungsbeispiel im Wesentlichen aus drei bezüglich der Mittelachse Z konzentrisch angeordneten Teilen, nämlich einem vorzugsweise aus Kunststoff spritzgusstechnisch erzeugten, ringförmigen ersten Gehäuseabschnitt 24, der einen Befestigungsabsatz 25 hat, einem bevorzugt aus Metall umformtechnisch geformten, hülsenartigen zweiten Gehäuseabschnitt 26, der axial endseitig einen sich nach radial innen erstreckenden Ringflansch 27 aufweist, und einem vorzugsweise ebenfalls aus Metall umformtechnisch erzeugten, hülsenartigen, gestuften dritten Gehäuseabschnitt 28, welcher axial endseitig einen sich nach radial außen erstreckenden Ringflansch 29 besitzt. Während der erste Gehäuseabschnitt 24 mit seinem Befestigungsabsatz 25 in dem zweiten Gehäuseabschnitt 26 eingesteckt und in dieser Position auf geeignete Weise gesichert und abgedichtet ist (in den Figuren lediglich schematisch gezeigt), sind der zweite Gehäuseabschnitt 26 und der dritte Gehäuseabschnitt 28 im Bereich der Ringflansche 27, 29 aneinander befestigt, z.B. mittels einer Schweißverbindung. Gemäß insbesondere der Fig. 3 ist der zweite hydraulische Druckanschluss E_{H2} am ersten Gehäuseabschnitt 24 einstückig angeformt. Der durch ein Kunststoffteil ausgebildete pneumatische Druckanschluss E_{P} ist auf geeignete Weise am Ringflansch 27 des zweiten Gehäuseabschnitts 26 dicht befestigt. Schließlich ist der ebenfalls durch ein Kunststoffteil ausgebildete erste hydraulische Druckanschluss E_{H1} in analoger Weise an einer Stufe 30 des dritten Gehäuseabschnitts 28 angebracht. Der Ringflansch 29 des dritten Gehäuseabschnitts 28 kann im Übrigen auch der Befestigung des Aktuators 12 in bzw. an einem Getriebegehäuse (nicht gezeigt) dienen, wie in den Fig. 1 und 2 oben bei 31 durch eine radiale Verlängerung mit strichpunktierter Mittelachse eines ansonsten nicht gezeigten Befestigungsmittels angedeutet.

Der vorzugsweise auch aus einem Kunststoff spritzgegossene Ringkolben 16 des Aktuators 12 ist auf seiner in den Fig. 1 und 2 linken Stirnseite mit einer ringförmigen Aussparung 32 versehen, die zur Aufnahme des Ausrücklagers G dient. Auf seiner in den Fig. 1 und 2 rechten Stirnseite hat der Ringkolben 16 eine weitere ringförmige Aussparung 34, die ein Lager für eine Vorlastfeder 36 - hier in der Form einer Schraubendruckfeder - bildet. Die in dem Pneumatikraum Kp des Aktuators 12 aufgenommene Vorlastfeder 36 stützt sich in den Fig. 1 und 2 rechts am Ringflansch 27 des zweiten Gehäuseabschnitts 26 ab und dient dazu, über den Ringkolben 16 das Ausrücklager G in der Betätigungsrichtung B definiert vorzuspannen. Wie die Fig. 1 und 2 ferner zeigen, ist der Ringkolben 16 umfangsseitig gestuft geformt, genauer gesagt an seinem in diesen Figuren rechten Ende außenumfangsseitig mit einem Aüßenbund 38 und an seinem in diesen Figuren linken Ende innenumfangsseitig mit einem Innenbund 40 versehen.

Hierdurch wird im Aktuator 12 in axial sehr kompakter Bauweise der eine (K_{H2}) der Hydraulikräume am Außenumfang des Ringkolbens 16 und der andere (K_{H1}) der Hydraulikräume am Innenumfang des Ringkolbens 16 ausgebildet, während der Pneumatikraum K_{P} bezüglich des Ringkolbens 16 stirnseitig liegt. Im Einzelnen ist, wie am besten in Fig. 2 zu sehen ist, der innenumfangsseitige, erste Hydraulikraum K_{H1} axial durch den Innenbund 40 des Ringkolbens 16 (nach links) und die Stufe 30 des dritten Gehäuseabschnitts 28 des Zylindergehäuses 14 (nach rechts) sowie radial durch die Außenumfangsfläche des dritten Gehäuseabschnitts 28 (nach innen) und die Innenumfangsfläche des Ringkolbens 16 (nach außen) begrenzt. Der zweite Hydraulikraum K_{H2} ist axial durch den Befestigungsabsatz 25 des ersten Gehäuseabschnitts 24 des Zylindergehäuses 14 (nach links) und den Außenbund 38 des Ringkolbens 16 (nach rechts) sowie radial durch die Außenumfangsfläche des Ringkolbens 16 (nach innen) und die Innenumfangsfläche des zweiten Gehäuseabschnitts 26 des Zylindergehäuses 14 (nach außen) begrenzt. Der Pneumatikraum K_{P} schließlich ist axial durch die in Fig. 2 rechte Stirnfläche des Ringkolbens 16 (nach links) und die Ringflansche 27, 29 der zweiten bzw. dritten Gehäuseabschnitte 26, 28 des Zylindergehäuses 14 (nach rechts) sowie radial durch die Außenumfangsfläche des dritten Gehäuseabschnitt 28 des Zylindergehäuses 14 (nach innen) und die Innenumfangsfläche des zweiten Gehäuseabschnitts 26 des Zylindergehäuses 14 (nach außen) begrenzt.

Dabei weist der Aktuator 12 insgesamt vier Dichtungslaufflächen auf, nämlich eine erste Dichtungslauffläche 42 am Außenumfang des dritten Gehäuseabschnitts 28 des Zylindergehäuses 14 rechts von der Stufe 30, eine zweite Dichtungslauffläche 44 am Innenumfang des zweiten Gehäuseabschnitts 26 des Zylindergehäuses 14, eine dritte Dichtungslauffläche 46 am Außenumfang des dritten Gehäuseabschnitts 28 des Zylindergehäuses 14 links von der Stufe 30 und eine vierte Dichtungslauffläche 48 am Außenumfang des Ringkolbens 16 links von dem Außenbund 38. Während die vorerwähnte erste Dichtungsanordnung 18 mit der erste Dichtungslauffläche 42 zusammenwirkt, wirkt die weiter oben bereits angesprochene zweite Dichtungsanordnung 20 mit der zweiten Dichtungslauffläche 44 zusammen. Analog sind der dritten Dichtungslauffläche 46 am Zylindergehäuse 14 eine dritte Dichtungsanordnung 50 am Ringkolben 16 und der vierten Dichtungslauffläche 48 am Ringkolben 16 eine vierte Dichtungsanordnung 52 am Zylindergehäuse 14 zugeordnet.

Die erste Dichtungsanordnung 18 dichtet zwischen dem ersten Hydraulikraum K_{H1} und dem Pneumatikraum K_{P} ab und ist hierfür, wie am besten in den Fig. 2 und 5 zu sehen ist, innenumfangsseitig am Ringkolben 16 nahe dessen in den Figuren rechter Stirnfläche angeordnet. Die erste Dichtungsanordnung 18 umfasst zwei axial voneinander beabstandete Dichtelemente, bei denen es sich im dargestellten Ausführungsbeispiel um zwei Nutringe 54, 55 handelt, die gemäß Fig. 5 derart in zugeordneten Nuten 56, 57 des Ringkolbens 16 aufgenommen sind, dass ihre dynamischen Dichtlippen 58, 59 voneinander weg weisen. Während die in Fig. 5 linke Nut 56 axial geschlossen ist, ist die in Fig. 5 rechte Nut 57 nach rechts axial offen, was die Entformung dieses Dichtungssitzes vereinfacht. Um den Nutring 55 in der Nut 57 zu halten, ist ein Sicherungsring 60 vorgesehen, der auf geeignete Weise am Ringkolben 16 befestigt ist, beispielsweise mittels einer Schweißverbindung. Axial zwischen den dynamischen Dichtlippen 58, 59 begrenzen die Nutringe 54, 55 einen Zwischenraum 62, der über einen in den Figuren schematisch eingezeichneten Ausgleichskanal 64 mit der Umgebung verbunden ist.

Wie am besten den Fig. 2 und 4 zu entnehmen ist, dichtet die zweite Dichtungsanordnung 20 zwischen dem zweiten Hydraulikraum K_{H2} und dem Pneumatikraum K_{P} ab und ist dafür außenumfangsseitig am Außenbund 38 des Ringkolbens 16 angeordnet. Auch die zweite Dichtungsanordnung 20 umfasst zwei axial voneinander beabstandete Dichtelemente, und zwar erneut zwei Nutringe 66, 67, die gemäß Fig. 4 derart in zugeordneten Nuten 68, 69 im Außenbund 38 des Ringkolbens 16 eingesetzt sind, dass ihre dynamischen Dichtlippen 70, 71 in entgegengesetzte Richtungen zeigen. Auch hier ist die in Fig. 4 linke Nut 68 axial geschlossen ausgebildet, während die in Fig. 4 rechte Nut 69 nach rechts axial offen ist. Zum Halten des Nutrings 67 in der Nut 69 ist ein weiterer Sicherungsring 72 vorgesehen, der am Ringkolben 16 angebracht ist, entsprechend dem Sicherungsring 60. Axial zwischen den dynamischen Dichtlippen 70, 71 begrenzen die Nutringe 66, 67 einen weiteren Zwischenraum 74, welcher vermittels eines in den Figuren schematisch dargestellten weiteren Ausgleichskanals 76 ebenfalls mit der Umgebung verbunden ist.

Die dritte Dichtungsanordnung 50, die zwischen dem ersten Hydraulikraum K_{H1} und der Umgebung abdichtet, ist gemäß den Fig. 1 und 2 innenumfangsseitig am Innenbund 40 des Ringkolbens 16 vorgesehen. Die dritte Dichtungsanordnung 50 umfasst einen zur Umgebung hin angeordneten Abstreifring 78 und auf der Seite des ersten Hydraulikraums K_{H1} einen weiteren Nutring 79, dessen dynamische Dichtlippe 80 zum ersten Hydraulikraum K_{H1} hin weist. Der Abstreifring 78 und der Nutring 79 sitzen jeweils in einer axial offenen Nut 81, 82 des Innenbunds 40 und werden hierin mit je einem Sicherungsring 83, 84 gehalten. Der Sicherungsring 83 wirkt auch mit einem am Außenumfang des dritten Gehäuseabschnitts 28 nahe dessen in den Figuren linken Ende angebrachten Schnappring 85 zusammen, um den Ringkolben 16 am dritten Gehäuseabschnitt 28 zu halten, bevor das Zylindergehäuse 14 durch Fügen des ersten Gehäuseabschnitts 24 zum zweiten Gehäuseabschnitt 26 komplettiert wird.

Ferner dichtet die vierte Dichtungsanordnung 52 zwischen dem zweiten Hydraulikraum K_{H2} und der Umgebung ab und ist hierfür gemäß den Fig. 2 und 3 innenumfangsseitig am ersten Gehäuseabschnitt 24 des Zylindergehäuses 14 angeordnet. Die vierte Dichtungsanordnung 52 weist einen zur Umgebung hin vorgesehenen Abstreifring 86 und einen auf der Seite des zweiten Hydraulikraums K_{H2} angeordneten Nutring 87 auf, dessen dynamische Dichtlippe 88 zum zweiten Hydraulikraum K_{H2} hin weist. Analog der Ausgestaltung bei der dritten Dichtungsanordnung 50 sitzen gemäß Fig. 3 der Abstreifring 86 und der Nutring 87 jeweils in einer axial offenen Nut 89, 90 des ersten Gehäuseabschnitts 24 und werden mit je einem am ersten Gehäuseabschnitt 24 angebrachten Sicherungsring 91, 92 in ihrer jeweiligen Position gehalten.

In Fig. 2 ist des Weiteren noch mit zur Mittelachse Z senkrechten Pfeilen eingezeichnet, wie sich die den jeweiligen Raum Kp, K_{H1}, K_{H2} im Aktuator 12 axial begrenzenden, in diesem Ausführungsbeispiel sämtlich kreisringförmigen Wirkflächen Ap, A_{H1}, A_{H2} größenmäßig ergeben. Die erste hydraulische Wirkfläche A_{H1} des ersten Hydraulikraums K_{H1} ist demnach die Differenzfläche aus einer mit dem Radius der ersten Dichtungslauffläche 42 am dritten Gehäuseabschnitt 28 des Zylindergehäuses 14 gebildeten Kreisfläche und einer mit dem Radius der dritten Dichtungslauffläche 46 am dritten Gehäuseabschnitt 28 gebildeten Kreisfläche. Bei der zweiten hydraulischen Wirkfläche A_{H2} des zweiten Hydraulikraums K_{H2} handelt es sich demgemäß um die Differenzfläche aus einer mit dem Radius der zweiten Dichtungslauffläche 44 am zweiten Gehäuseabschnitt 26 des Zylindergehäuses 14 gebildeten Kreisfläche und einer mit dem Radius der vierten Dichtungslauffläche 48 am Außenumfang des Ringkolbens 16 gebildeten Kreisfläche. Die flächengrößte, pneumatische Wirkfläche A_{P} des Pneumatikraums K_{P} schließlich ist die Differenzfläche aus einer mit dem Radius der zweiten Dichtungslauffläche 44 am zweiten Gehäuseabschnitt 26 des Zylindergehäuses 14 gebildeten Kreisfläche und einer mit dem Radius der ersten Dichtungslauffläche 42 am dritten Gehäuseabschnitt 28 des Zylindergehäuses 14 gebildeten Kreisfläche.

Im Folgenden wird der Betrieb der Vorrichtung 10 näher erläutert, bei dem die Steuerung CPU das 3/2-Wege-Schaltventil V_{P} sowie die ersten und zweiten 2/2-Wege-Proportionalventile V_{H1}, V_{H2} u.a. in Abhängigkeit von den mittels der Sensoranordnung (Positionssensor PS, Signalelement SE) am Aktuator 12 erfassten Positionssignalen geeignet ansteuert und koordiniert. Ferner erhält die Steuerung CPU über ein geeignetes Bus-System (CAN, LIN, FlexRay od.dgl.) Vorgaben von einer übergeordneten Getriebeelektronik (TCU; in den Figuren nicht gezeigt), oder etwa Vorgaben von einem Weg- oder Winkelsensor eines Kupplungspedals mit Pedalkraftsimulator (ebenfalls nicht dargestellt), je nach Einsatz der Vorrichtung 10.

Zur Betätigung der Kupplung steuert die Steuerung CPU zunächst das 3/2-Wege-Schaltventil Vp an, um die Druckluftquelle Q_{P} mit dem Pneumatikraum K_{P} im Aktuator 12 zu verbinden, wodurch die Druckluft direkt auf die pneumatische Wirkfläche A_{P} geschaltet wird, was im Zylindergehäuse 14 aktiv eine Bewegung des Ringkolbens 16 in der Betätigungsrichtung B initiiert. Infolge dieser Bewegung des Ringkolbens 16 kommt es zu einer Verdrängung des im zweiten Hydraulikraum K_{H2} des Aktuators 12 vorhandenen Hydraulikfluids in Richtung des Vorratsbehälters Q_{H}. Zugleich wird das der zweiten hydraulischen Wirkfläche A_{H2} zugeordnete zweite 2/2-Wege-Proportionalventil V_{H2} von der Steuerung CPU auf einen Wert vorbestromt, der es vollständig schließt, so dass sich im zweiten Hydraulikraum K_{H2} des Aktuators 12 passiv ein hydraulischer Druck aufbaut, welcher auf die zweite hydraulische Wirkfläche A_{H2} wirkt, dabei an dieser eine Kraft in Rückstellrichtung R erzeugt und somit die Bewegung des Ringkolbens 16 in der Betätigungsrichtung B bremst bzw. zu stoppen versucht. Einhergehend mit der Bewegung des Ringkolbens 16 in der Betätigungsrichtung B vergrößert sich der erste Hydraulikraum K_{H1} im Zylindergehäuse 14, wodurch Hydraulikfluid über das unbestromte, d.h. hier geöffnete erste 2/2-Wege-Proportionalventil V_{H1} aus dem Vorratsbehälter Q_{H} angesaugt wird bzw. nachströmt.

Der Verfahrweg des Ringkolbens 16 im Zylindergehäuse 14 wird nun von der Steuerung CPU gemäß den Vorgaben von der übergeordneten Getriebeelektronik (TCU) sowie den über die Sensoranordnung am Aktuator 12 erfassten Ist-Positionen des Ringkolbens 16 durch Reduktion des Stroms am zweiten 2/2-Wege-Proportionalventil V_{H2} in einer geschlossenen Schleife eingeregelt. Dabei wird das zweite 2/2-Wege-Proportionalventil V_{H2} definiert geöffnet, wobei sich nach Maßgabe des jeweils geöffneten Ventilquerschnitts (Drosselspalt) ein hydraulischer (Stau)Druck im zweiten Hydraulikraum K_{H2} einstellt, der auf die zweite hydraulische Wirkfläche A_{H2} wirkend die pneumatisch erzwungene Bewegung des Ringkolbens 16 im Zylindergehäuse 14 mehr oder weniger bremst.

Im Gleichgewichtszustand (a = b + c) ist (a) der von der Druckluftquelle Q_{P} bereitgestellte Luftdruck multipliziert mit der pneumatischen Wirkfläche A_{P} am Ringkolben 16 gleich der Summe aus (b) dem sich im zweiten Hydraulikraum K_{H2} des Aktuators 12 aufgrund des stauenden zweiten 2/2-Wege-Proportionalventils V_{H2} ergebenden Hydraulikdruck multipliziert mit der zweiten hydraulischen Wirkfläche A_{H2} am Ringkolben 16 und (c) der Federkraft der Kupplung. In der Praxis kann das Verhältnis des pneumatischen Drucks zum hydraulischen Druck beispielsweise etwa 1 zu 6 betragen, mit bis zu 8 bar Luftdruck und bis zu 50 bar Hydraulikdruck. Mit diesen Gesetzmäßigkeiten lässt sich gezielt die Verfahrgeschwindigkeit des Ringkolbens 16 im Aktuator 12 von maximal möglicher Geschwindigkeit bis hin zum Stillstand des Ringkolbens 16 im Zylindergehäuse 14 einstellen, wie auch beliebige Zwischenpositionen des Ringkolbens 16 gehalten werden können. Ist eine Soll-Position des Ringkolbens 16 im Zylindergehäuse 14 erreicht, wird das zweite 2/2-Wege-Proportionalventil V_{H2} voll bestromt und damit geschlossen, so dass die Bewegung des Ringkolbens 16 gestoppt wird.

Für die eigentliche Bewegungsregelung (Verfahrgeschwindigkeit und Position) können neben dem Positionssignal des im Aktuator 12 integrierten Positionssensors PS die bekannte Charakteristik der eingesetzten Kupplung und die an den aktiven Wirkflächen des Aktuators 12 wirkenden Drücke verwendet werden. Diese Drücke können hierbei entweder direkt über Drucksensoren (in den Figuren nicht dargestellt) oder indirekt bei der Druckluft über das Bus-System und beim Hydraulikdruck über den Strom des jeweils aktiven Regelventils V_{H2} (bzw. V_{H1}) ermittelt werden.

Sollte die vorgegebene Position vom Ringkolben 16 im Zylindergehäuse 14 überfahren worden sein, oder soll der Ringkolben 16 wieder in seine Ausgangs- bzw. Ruhestellung gefahren werden, wird das erste 2/2-Wege-Proportionalventil V_{H1} auf einen entsprechenden Wert vorbestromt und die Druckluft weggeschaltet, d.h. die Bestromung des 3/2-Wege-Schaltventils V_{P} - wie dann auch die Bestromung des zweiten 2/2-Wege-Proportionalventils V_{H2} - beendet. Infolgedessen schiebt die Federkraft der Kupplung über das Stellglied G den Ringkolben 16 in Rückstellrichtung R, wobei diese Rückwärtsbewegung - analog der Bewegung in Betätigungsrichtung B - durch geeignete Bestromung des ersten 2/2-Wege-Proportionalventils V_{H1} definiert gebremst bzw. gestoppt werden kann. Dabei baut sich nach Maßgabe des geöffneten Ventilquerschnitts des ersten 2/2-Wege-Proportionalventils V_{H1} in dem ersten Hydraulikraum K_{H1} ein Druck auf, der auf die erste hydraulische Wirkfläche A_{H1} wirkt und damit der Rückwärtsbewegung des Ringkolbens 16 im Zylindergehäuse 14 einen Widerstand entgegensetzt. Zugleich fließt über das geöffnete zweite 2/2-Wege-Proportionalventil V_{H2} Hydraulikfluid vom Vorratsbehälter Q_{H} in den zweiten Hydraulikraum K_{H2} des Aktuators 12 nach. Ist die Soll-Position des Ringkolbens 16 wieder erreicht, kann diese durch Schließen beider 2/2-Wege-Proportionalventile V_{H1}, V_{H2} gehalten werden. Eine weitere Rückwärtsbewegung des Ringkolbens 16 in seine Ausgangsstellung kann schließlich bei stromlosem 3/2-Wege-Schaltventil V_{P} und stromlosem zweiten 2/2-Wege-Proportionalventil V_{H2} durch geeignete Bestromung des ersten 2/2-Wege-Proportionalventils V_{H1} kontrolliert erfolgen.

Die Fig. 6 bis 9 zeigen weitere Ausführungsbeispiele der Vorrichtung 10 mit dem vorbeschriebenen Aktuator 12, die nachfolgend nur insoweit beschrieben werden sollen, als sie sich von der oben unter Bezugnahme auf die Fig. 1 bis 5 erläuterten Vorrichtung 10 unterscheiden. Für den Fachmann ist hierbei ersichtlich, dass die jeweils anderen Maßnahmen ggf. auch in Kombination vorgesehen werden können (siehe die Rückbezüge in den entsprechenden Patentansprüchen), ohne dass dies nachfolgend stets eigens erwähnt werden muss.

Bei der Vorrichtung 10 gemäß Fig. 6 ist die pneumatische Ansteuerung des Aktuators 12 anders ausgebildet als bei der Vorrichtung 10 gemäß Fig. 1. Anstelle des 3/2-Wege-Schaltventils Vp von Fig. 1 sind zwei Schaltventile V_{P1}, V_{P2} vorgesehen. Genauer gesagt ist zwischen der Druckluftquelle Q_{P} und dem Pneumatikraum Kp des Aktuators 12 ein federvorgespanntes und elektromagnetisch betätigbares, erstes 2/2-Wege-Schaltventil V_{P1} geschaltet, das mittels der Steuerung CPU über eine Steuerleitung S_{P1} angesteuert werden kann und im durch die Steuerung CPU angesteuerten Zustand die Druckluftquelle Q_{P} mit dem Pneumatikraum Kp verbindet. Ferner ist zwischen dem Pneumatikraum Kp und der Umgebung ein federvorgespanntes und elektromagnetisch betätigbares, zweites 2/2-Wege-Schaltventil V_{P2} geschaltet, welches ebenfalls mittels der Steuerung CPU über eine Steuerleitung S_{P2} angesteuert werden kann und im durch die Steuerung CPU angesteuerten Zustand den Pneumatikraum K_{P} mit der Umgebung (links unten am Ventil V_{P2} durch das Dreieck angedeutet) verbindet. Infolge dieser Ausgestaltung der Schaltventile V_{P1}, V_{P2} mit Federvorspannung in Sperr-Null-Stellung bleibt der jeweilige Druckluftzustand bei über die Steuerung CPU weggeschaltetem Strom erhalten, was etwa in einem Betriebszustand des Aktuators 12 zum Halten einer bestimmten Position des Stellglieds S im Hinblick auf die Energieeffizienz sehr günstig ist.

Die Vorrichtung 10 gemäß Fig. 7 unterscheidet sich von der Vorrichtung 10 nach Fig. 1 dahingehend, dass der Vorratsbehälter Q_{H} für Hydraulikfluid geschlossen ausgebildet ist, so dass oberhalb eines Flüssigkeitsspiegels H_{S} des Hydraulikfluids in dem Vorratsbehälter Q_{H} eine Luftkammer K_{L} verbleibt. Diese Luftkammer K_{L} ist ferner über eine Luftleitung L_{L} mit einem Druckminderventil V_{M} an die Druckluftquelle Q_{P} angeschlossen, wodurch das Hydraulikfluid in dem Vorratsbehälter Q_{H} mit einem Vordruck beaufschlagt wird, der größer ist als der Atmosphärendruck. Diese Maßnahmen unterstützen bzw. erleichtern das Füllen des jeweils unbelasteten Hydraulikzweigs - also im Falle einer Verschiebung des Ringkolbens 16 in Betätigungsrichtung B das Füllen der ersten Hydraulikleitung L_{H1} sowie des ersten Hydraulikraums K_{H1} im Aktuator 12 und im Falle einer Verschiebung des Ringkolbens 16 in Rückstellrichtung R das Füllen der zweiten Hydraulikleitung L_{H2} sowie des zweiten Hydraulikraums K_{H2} im Aktuator 12 - und sorgen zudem für eine gewisse Vorspannung der jeweiligen Hydraulikdichtungen (Nutringe 54, 79 am ersten Hydraulikraum K_{H1} bzw. Nutringe 66, 87 am zweiten Hydraulikraum K_{H2}). Im Ergebnis kann durch eine solche, die Steifigkeit des hydraulischen Systems erhöhende Druckvorspannung des Vorratsbehälters Q_{H} insbesondere die Reaktion des Aktuators 12 beim Umschalten der Bewegungsrichtung von Betätigungsrichtung B auf Rückstellrichtung R oder umgekehrt im Hinblick auf Reaktionsgeschwindigkeit und Stellgenauigkeit verbessert werden.

Bei der Vorrichtung 10 gemäß Fig. 8 - und optional (gestrichelte Linien) bei der Vorrichtung 10 nach Fig. 9 - ist gegenüber der Vorrichtung 10 gemäß Fig. 1 zu dem ersten und dem zweiten 2/2-Wege-Proportionalventil V_{H1}, V_{H2} jeweils eine Bypass-Leitung L_{B1}, L_{B2} mit einem Bypass-Rückschlagventil V_{R1}, V_{R2} parallel geschaltet, das in einer Richtung vom Aktuator 12 zum Vorratsbehälter Q_{H} hin sperrt. Diese Erweiterung der Vorrichtung 10 ermöglicht es, im hydraulischen System das jeweils unbelastete 2/2-Wege-Proportionalventil V_{H1} bzw. V_{H2} "mitzuführen": Um bei einer Bewegungsumkehrung (von Betätigungsrichtung B in Rückstellrichtung R oder umgekehrt) die Position des Stellglieds G sehr genau halten zu können, kann das jeweils unbelastete bzw. "nicht bremsende" Ventil - d.h. bei einer Bewegung des Ringkolbens 16 in der Betätigungsrichtung B das erste 2/2-Wege-Proportionalventil V_{H1} und bei einer Bewegung des Ringkolbens 16 in der Rückstellrichtung R das zweite 2/2-Wege-Proportionalventil V_{H2} - kontinuierlich oder auch nur in Situationen, in denen eine Bewegungsumkehrung erforderlich sein kann, auf einen bestimmten Stromwert vorbestromt, also definiert teilgeschlossen werden. Die Bewegung in der geänderten Bewegungsrichtung kann damit umgehend kontrolliert erfolgen, ohne dass es hierzu eines längeren Einregelvorgangs bedürfte. Die Bypass-Rückschlagventile V_{R1}, V_{R2} ermöglichen hierbei eine Versorgung des jeweils unbelasteten Hydraulikzweigs mit Hydraulikfluid am jeweiligen vorbestromten 2/2-Wege-Proportionalventil V_{H1} bzw. V_{H2} vorbei.

Die Vorrichtung 10 gemäß Fig. 9 unterscheidet sich von der Vorrichtung 10 nach Fig. 1 ferner dadurch, dass parallel zum zweiten 2/2-Wege-Proportionalventil V_{H2} eine Pumpenleitung L_{D} mit einer elektromotorisch (Elektromotor M) antreibbaren Hydraulikpumpe P und einem pumpenausgangsseitig angeordneten, zur Hydraulikpumpe P hin sperrenden Pumpen-Rückschlagventil V_{RP} geschaltet ist. Dabei kann die Hydraulikpumpe P, genauer deren Elektromotor M über eine Steuerleitung S_{M} mittels der Steuerung CPU angesteuert werden, um den zweiten Hydraulikraum K_{H2} des Aktuators 12 wahlweise aktiv mit einem hydraulischen Druck zu beaufschlagen. Diese Maßnahmen, die mittels der Hydraulikpumpe P die Erzeugung einer Bewegung in Rückstellrichtung R, d.h. entgegen der Richtung des Luftdrucks (Betätigungsrichtung B) ermöglichen, gestatten eine Feinregelung der Aktuatorbewegungen. So kann z.B. an der Kupplung durch eine geeignete Hin- und Herbewegung des Stellglieds G ein sogenannter "Mikroschlupf" erzeugt werden, der dazu dient, Drehwinkel-Ungleichförmigkeiten unter Umwandlung von Schwingungsenergie in Wärmeenergie auszugleichen und damit Drehschwingungen vom Getriebe fernzuhalten. Die Hydraulikpumpe P kann dabei im Fördervolumen sehr klein gehalten werden, weil die für die Mikroschlupferzeugung erforderliche Dynamik des Hydraulikdrucks nicht groß ist.

Die Fig. 10 bis 12 zeigen weitere Varianten eines Aktuators 12', 12" für eine Vorrichtung 10 zur Kupplungsbetätigung in einem Kraftfahrzeug, die nachfolgend nur insoweit beschrieben werden sollen, als sie sich wesentlich von dem oben unter Bezugnahme auf die Fig. 1 bis 5 beschriebenen Aktuator 12 unterscheiden und es für das Verständnis der vorliegenden Erfindung erforderlich erscheint. Diese Aktuatorvarianten 12', 12" können mit ihren Wirkflächen A_{H1,} A_{H2}, Ap, Druckräumen K_{H1}, K_{H2}, K_{P} und Druckanschlüssen E_{H1}, E_{H2}, E_{P} selbstredend bei jeder der Vorrichtungen 10 gemäß den Fig. 1 und 6 bis 9 zum Einsatz kommen. Gemein ist den weiteren Aktuatorvarianten 12' (Fig. 10 und 11) und 12" (Fig. 12) hierbei, dass sie im Gegensatz zum vorbeschriebenen Aktuator 12 nicht in der Art eines Zentralausrückers ausgestaltet sind. Vielmehr sind diese Aktuatoren 12', 12" in der Art eines konventionellen Kupplungsnehmerzylinders mit zentraler Sackbohrung 94', 94" im Zylindergehäuse 14', 14" ausgebildet, in welcher der - nicht ringförmige - Kolben 16', 16" längsverschieblich aufgenommen ist, der betätigungswirksam mit einer mittigen Kolbenstange als Stellglied G verbunden ist.

Bei dem Aktuator 12' gemäß den Fig. 10 und 11 sind im Aktuator 12' beide Hydraulikräume K_{H1}, K_{H2} axial hintereinander liegend am Außenumfang des Kolbens 16' ausgebildet, während der Pneumatikraum K_{P} bezüglich des Kolbens 16' stirnseitig, d.h. in den Fig. 10 und 11 links vom Kolben 16' liegt. Hierfür ist das im dargestellten Ausführungsbeispiel metallische Zylindergehäuse 14' zur Ausbildung der Dichtungslaufflächen 42', 44' für die Dichtungsanordnungen 18', 20' innenumfangsseitig, d.h. in der Sackbohrung 94' mehrfach gestuft geformt, während der im Wesentlichen hohlzylindrische Kolben 16' am Außenumfang gestuft und mit zwei Bünden 96', 97' versehen ist, welche die Dichtungsanordnungen 18', 20' tragen. Die Nutringe 54', 55' der ersten Dichtungsanordnung 18' sitzen hierbei in am Bund 96' ausgebildeten Radialnuten 56', 57' des Kolbens 16', während die Nutringe 66', 67' der zweiten Dichtungsanordnung 20' in am Bund 97' ausgebildeten Radialnuten 68', 69' aufgenommen sind. Somit dichtet die erste Dichtungsanordnung 18' zwischen dem Pneumatikraum K_{P} und dem ersten Hydraulikraum K_{H1} und die zweite Dichtungsanordnung 20' zwischen dem ersten Hydraulikraum K_{H1} und dem zweiten Hydraulikraum K_{H2} ab. Die den zweiten Hydraulikraum K_{H2} gegenüber der Umgebung abdichtende Dichtungsanordnung 52' ist mittels eines aus Kunststoff bestehenden Ringteils 98' unter Zuhilfenahme eines Schnapprings 99' am Zylindergehäuse 14' befestigt. Eine weitere Dichtungsanordnung ist im Vergleich zum vorbeschriebenen Aktuator 12 gemäß den Fig. 1 bis 5 entbehrlich. Das Ringteil 98' dient weiterhin auch der endseitigen Festlegung eines elastomeren Faltenbalgs 100' am Zylindergehäuse 14', dessen anderes Ende auf der Kolbenstange G aufgeknüpft ist, die ihrerseits über ein Lagerteil 101' an zentraler Stelle im Kolben 16' winkelbeweglich angelenkt ist. Schließlich ist das Zylindergehäuse 14' an seinem offenen Ende mit einem Ringflansch 102' versehen, welcher der Befestigung des Aktuators 12' in oder an dem Getriebegehäuse (nicht gezeigt) dient.

Der in Fig. 12 dargestellte Aktuator 12" baut gegenüber dem Aktuator 12' der Fig. 10 und 11 deutlich kürzer und ist insofern vom axialen Bauraumbedarf her der ersten Aktuatorvariante 12 ähnlicher. Dies wird beim Aktuator 12" dadurch ermöglicht, dass der Kolben 16" des Aktuators 12" eine zentrale, im dargestellten Ausführungsbeispiel ringförmige - becherförmig ginge hier auch - Vertiefung 104" aufweist, in die ein am Zylindergehäuse 14" bodenseitig vorgesehener, zentraler, hier ebenfalls ringförmiger Vorsprung 106" eintaucht. Dabei ist einer (K_{H1}) der Hydraulikräume zwischen dem Vorsprung 106" des Zylindergehäuses 14" und der Vertiefung 104" des Kolbens 16" ausgebildet, während sich ein anderer (K_{H2}) der Hydraulikräume am Außenumfang des Kolbens 16" befindet. Der Pneumatikraum Kp liegt wiederum bezüglich des Kolbens 16" stirnseitig, wobei eine Mehrzahl von im Pneumatikraum Kp angeordneten Vorlastfedern 36" den Kolben 16" gegenüber dem Zylindergehäuse 14" in der Betätigungsrichtung B vorspannt. Außenbünde 108" , 110" am Außenumfang des Vorsprungs 106" und am Außenumfang des Kolbens 16" tragen die Dichtungsanordnungen 18", 20" , welche zwischen dem Pneumatikraum Kp und dem ersten Hydraulikraum K_{H1} (erste Dichtungsanordnung 18") bzw. zwischen dem Pneumatikraum K_{P} und dem zweiten Hydraulikraum K_{H2} (zweite Dichtungsanordnung 20") abdichten. Die - in Fig. 12 zur Vereinfachung der Darstellung nicht gezeigte - Sensoranordnung kann ebenfalls am Aktuator 12" vorgesehen sein, mit einem zylindergehäusefesten Positionssensor und einem geeignet am Kolben angebrachten Signalelement. Es ist indes auch möglich, die Sensoranordnung an geeigneter Stelle an der Kolbenstange G oder dem Stellglied nachgelagert an der Kupplung vorzusehen, was ebenfalls für die beiden anderen Aktuatorvarianten 12, 12' gilt.

Sollte den jeweiligen Betätigungserfordernissen entsprechend bei dem Aktuator 12" eine noch größere pneumatische Wirkfläche Ap benötigt werden, so könnte radial innerhalb des Vorsprungs 106" des Zylindergehäuses 14" zwischen dem Vorsprung 106" und dem hier vorgesehenen, das Lagerteil 101" für die Kolbenstange G aufnehmenden inneren Fortsatz des Kolbens 16" eine weitere Dichtungsanordnung (nicht gezeigt) vorgesehen werden, um einen zentralen zweiten Pneumatikraum von dem ersten Hydraulikraum K_{H1} abzutrennen. Der erste hydraulische Druckanschluss E_{H1} müsste dann lediglich durch den Vorsprung 106" zum ersten Hydraulikraum K_{H1} geführt und eine Verbindung zwischen dem Pneumatikraum K_{P} und dem zweiten Pneumatikraum geschaffen werden.

Ein Aktuator für eine Vorrichtung zur Kupplungsbetätigung in einem Kraftfahrzeug hat ein einen pneumatischen Druckanschluss und wenigstens einen hydraulischen Druckanschluss aufweisendes Zylindergehäuse, in dem ein mit einem Stellglied wirkverbundener Kolben längsverschieblich aufgenommen ist, der zusammen mit dem Zylindergehäuse einen über den pneumatischen Druckanschluss druckbeaufschlagbaren Pneumatikraum und wenigstens einen mit dem hydraulischen Druckanschluss verbundenen Hydraulikraum definiert, die vermittels einer Dichtungsanordnung voneinander getrennt sind. In sehr kompakter Ausgestaltung des Aktuators sind an dem Kolben eine den Pneumatikraum axial begrenzende pneumatische Wirkfläche und wenigstens eine entgegengesetzte, den Hydraulikraum axial begrenzende hydraulische Wirkfläche ausgebildet, so dass durch Druckbeaufschlagung des Pneumatikraums das Stellglied über den Kolben in einer Betätigungsrichtung gegen eine in einer Rückstellrichtung wirkende, äußere Rückstellkraft längsverschiebbar und eine Kolbenbewegung durch Druckaufbau in dem wenigstens einen Hydraulikraum kontrollierbar ist.

### BEZUGSZEICHENLISTE

- 10: Vorrichtung
- 12, 12', 12": Aktuator
- 14, 14', 14": Zylindergehäuse
- 16, 16', 16": Kolben
- 18, 18', 18": erste Dichtungsanordnung
- 20, 20', 20": zweite Dichtungsanordnung
- 22: zentraler Durchgang
- 24: erster Gehäuseabschnitt
- 25: Befestigungsabsatz
- 26: zweiter Gehäuseabschnitt
- 27: Ringflansch
- 28: dritter Gehäuseabschnitt
- 29: Ringflansch
- 30: Stufe
- 31: radiale Verlängerung
- 32: ringförmige Aussparung
- 34: ringförmige Aussparung
- 36, 36": Vorlastfeder
- 38: Außenbund
- 40: Innenbund
- 42, 42', 42": erste Dichtungslauffläche
- 44, 44', 44": zweite Dichtungslauffläche
- 46: dritte Dichtungslauffläche
- 48, 48', 48": vierte Dichtungslauffläche
- 50: dritte Dichtungsanordnung
- 52, 52', 52": vierte Dichtungsanordnung
- 54, 54', 54": Nutring
- 55, 55', 55": Nutring
- 56, 56', 56": Nut
- 57, 57', 57": Nut
- 58, 58', 58": dynamische Dichtlippe
- 59, 59', 59": dynamische Dichtlippe
- 60: Sicherungsring
- 62, 62', 62": Zwischenraum
- 64, 64', 64": Ausgleichskanal
- 66, 66', 66": Nutring
- 67, 67', 67": Nutring
- 68, 68', 68": Nut
- 69, 69', 69": Nut
- 70, 70', 70": dynamische Dichtlippe
- 71, 71', 71": dynamische Dichtlippe
- 72: Sicherungsring
- 74, 74', 74": Zwischenraum
- 76, 76', 76": Ausgleichskanal
- 78: Abstreifring
- 79: Nutring
- 80: dynamische Dichtlippe
- 81: Nut
- 82: Nut
- 83: Sicherungsring
- 84: Sicherungsring
- 85: Schnappring
- 86: Abstreifring
- 87, 87', 87": Nutring
- 88, 88', 88": dynamische Dichtlippe
- 89: Nut
- 90: Nut
- 91: Sicherungsring
- 92: Sicherungsring
- 94', 94": Sackbohrung
- 96': Bund
- 97': Bund
- 98', 98": Ringteil
- 99', 99": Schnappring
- 100', 100": Faltenbalg
- 101', 101": Lagerteil
- 102', 102": Ringflansch
- 104": Vertiefung
- 106": Vorsprung
- 108": Außenbund
- 110": Außenbund

- A_{H1}: erste hydraulische Wirkfläche
- AH₂: zweite hydraulische Wirkfläche
- A_{P}: pneumatische Wirkfläche
- B: Betätigungsrichtung
- CPU: Steuerung
- E_{P}: pneumatischer Druckanschluss
- E_{H1}: erster hydraulischer Druckanschluss
- E_{H2}: zweiter hydraulischer Druckanschluss
- G: Stellglied
- Hs: Flüssigkeitsspiegel
- K_{H1}: erster Hydraulikraum
- K_{H2}: zweiter Hydraulikraum
- K_{L}: Luftkammer
- K_{P}: Pneumatikraum
- L_{B1}: erste Bypass-Leitung
- L_{B2}: zweite Bypass-Leitung
- L_{D}: Pumpenleitung
- L_{H1}: erste Hydraulikleitung
- L_{H2}: zweite Hydraulikleitung
- L_{L}: Luftleitung
- L_{P}: Pneumatikleitung
- M: Elektromotor
- P: Hydraulikpumpe
- PS: Positionssensor
- Q_{H}: Vorratsbehälter für Hydraulikfluid
- Qp: Druckluftquelle
- R: Rückstellrichtung
- SE: Signalelement / Magnet
- S_{H1}: Steuerleitung zum ersten Hydraulikventil
- S_{H2}: Steuerleitung zum zweiten Hydraulikventil
- S_{M}: Steuerleitung zum Elektromotor
- S_{P}: Steuerleitung zum Pneumatikventil
- S_{P1}: Steuerleitung zum ersten Pneumatikventil
- S_{P2}: Steuerleitung zum zweiten Pneumatikventil
- S_{S}: Signalleitung vom Positionssensor
- V_{H1}, V_{H1}': erstes 2/2-Wege-Proportionalventil
- V_{H2}, V_{H2}': zweites 2/2-Wege-Proportionalventil
- V_{M}: Druckminderventil
- V_{P}: 3/2-Wege-Schaltventil
- V_{P1}: erstes 2/2-Wege-Schaltventil
- V_{P2}: zweites 2/2-Wege-Schaltventil
- V_{R1}: erstes Bypass-Rückschlagventil
- V_{R2}: zweites Bypass-Rückschlagventil
- V_{RP}: Pumpen-Rückschlagventil

## Patentansprüche

1. Aktuator (12, 12', 12"), insbesondere Nehmerzylinder, für eine Vorrichtung (10) zur Kupplungsbetätigung in einem Kraftfahrzeug, mit einem einen pneumatischen Druckanschluss (Ep) und wenigstens einen hydraulischen Druckanschluss (E_{H1}, E_{H2}) aufweisenden Zylindergehäuse (14, 14', 14"), in dem ein mit einem Stellglied (G) mechanisch wirkverbundener Kolben (16, 16', 16") längsverschieblich aufgenommen ist, der zusammen mit dem Zylindergehäuse (14, 14', 14") einen über den pneumatischen Druckanschluss (Ep) druckbeaufschlagbaren Pneumatikraum (K_{P}) und wenigstens einen mit dem hydraulischen Druckanschluss (E_{H1}, E_{H2}) verbundenen Hydraulikraum (K_{H1}, K_{H2}) definiert, die vermittels einer Dichtungsanordnung (18, 20; 18', 20'; 18", 20") voneinander getrennt sind, wobei an dem Kolben (16, 16', 16") eine den Pneumatikraum (K_{P}) axial begrenzende pneumatische Wirkfläche (A_{P}) und wenigstens eine den Hydraulikraum (K_{H2}) axial begrenzende, zur pneumatischen Wirkfläche (Ap) entgegengesetzt ausgerichtete hydraulische Wirkfläche (A_{H2}) ausgebildet sind, so dass durch Druckbeaufschlagung des Pneumatikraums (K_{P}) das Stellglied (G) über den Kolben (16, 16', 16") in einer Betätigungsrichtung (B) gegen eine in einer Rückstellrichtung (R) wirkende, äußere Rückstellkraft längsverschiebbar und eine Kolbenbewegung durch Druckaufbau in dem wenigstens einen Hydraulikraum (K_{H1}, K_{H2}) kontrollierbar ist.

2. Aktuator (12, 12', 12") nach Anspruch 1, wobei das Zylindergehäuse (14, 14', 14") zwei hydraulische Druckanschlüsse (E_{H1}, E_{H2}) aufweist und zusammen mit dem Kolben (16, 16' , 16.'') neben dem Pneumatikraum (K_{P}) zwei Hydraulikräume (K_{H1}, K_{H2}) definiert, die mit jeweils einem der hydraulischen Druckanschlüsse (E_{H1}, E_{H2}) verbunden sind und vermittels zwei Dichtungsanordnungen (18, 20; 18', 20'; 18", 20") voneinander und von dem Pneumatikraum (K_{P}) getrennt sind, wobei an dem Kolben (16, 16', 16") neben der pneumatischen Wirkfläche (A_{P}) zwei jeweils einen der Hydraulikräume (K_{H1}, K_{H2}) axial begrenzende hydraulische Wirkflächen (A_{H1}, A_{H2}) einander entgegengesetzt ausgebildet sind, so dass eine Bewegung des Kolbens (16, 16', 16") durch Druckaufbau in einem ersten (K_{H1}) der Hydraulikräume in der Rückstellrichtung (R) kontrolliert bremsbar ist und durch Druckaufbau in einem zweiten (K_{H2}) der Hydraulikräume in der Betätigungsrichtung (B) kontrolliert bremsbar ist.

3. Aktuator (12, 12', 12") nach Anspruch 1 oder 2, wobei das Zylindergehäuse (14, 14', 14") und der Kolben (16, 16', 16'') zur Ausbildung des wenigstens einen Hydraulikraums (K_{H1}, K_{H2}) und der diesen begrenzenden hydraulischen Wirkfläche (A_{H1}, A_{H2}) umfangsseitig gestuft geformt sind.

4. Aktuator (12) nach einem der vorhergehenden Ansprüche, der in der Art eines Zentralausrückers ausgebildet ist, wobei das Zylindergehäuse (14) im Bereich einer Mittelachse (Z) einen Durchgang (22) für eine Getriebewelle besitzt und der im Zylindergehäuse (14) längsverschieblich aufgenommene Kolben ein Ringkolben (16) ist, der ein Ausrücklager als Stellglied (G) trägt.

5. Aktuator (12) nach wenigstens den Ansprüchen 2 und 4, wobei einer (K_{H2}) der Hydraulikräume am Außenumfang des Ringkolbens (16) und ein anderer (K_{H1}) der Hydraulikräume am Innenumfang des Ringkolbens (16) ausgebildet ist, während der Pneumatikraum (Kp) bezüglich des Ringkolbens (16) stirnseitig liegt.

6. Aktuator (12', 12") nach einem der Ansprüche 1 bis 3, der in der Art eines Kupplungsnehmerzylinders mit zentraler Sackbohrung (94', 94") im Zylindergehäuse (14', 14") ausgebildet ist, in welcher der Kolben (16', 16") längsverschieblich aufgenommen ist, der betätigungswirksam mit einer mittigen Kolbenstange als Stellglied (G) verbunden ist.

7. Aktuator (12') nach wenigstens den Ansprüchen 2 und 6, wobei beide Hydraulikräume (K_{H1}, K_{H2}) axial hintereinander liegend am Außenumfang des Kolbens (16') ausgebildet sind, während der Pneumatikraum (Kp) bezüglich des Kolbens (16') stirnseitig liegt.

8. Aktuator (12") nach wenigstens den Ansprüchen 2 und 6, wobei der Kolben (16") eine zentrale Vertiefung (104") aufweist, in die ein am Zylindergehäuse (14") vorgesehener, zentraler Vorsprung (106'') eintaucht, und wobei einer (K_{H1}) der Hydraulikräume zwischen dem Vorsprung (106") des Zylindergehäuses (14") und der Vertiefung (104") des Kolbens (16") ausgebildet ist und sich ein anderer (K_{H2}) der Hydraulikräume am Außenumfang des Kolbens (16") befindet, während der Pneumatikraum (K_{P}) bezüglich des Kolbens (16") stirnseitig liegt.

9. Aktuator (12, 12', 12") nach einem der vorhergehenden Ansprüche, wobei wenigstens die den Pneumatikraum (Kp) vom jeweiligen Hydraulikraum (K_{H1}, K_{H2}) trennende Dichtungsanordnung (18, 20; 18'; 18", 20'') zwei axial voneinander beabstandete Dichtelemente (54, 55, 66, 67; 54', 55', 66', 67'; 54'', 55'', 66'', 67") mit einem Zwischenraum (62, 74; 62', 74'; 62", 74") dazwischen aufweist, der über einen Ausgleichskanal (64, 76; 64', 76'; 64", 76") mit der Umgebung verbunden ist.

## Claims

1. Actuator (12, 12', 12"), in particular slave cylinder, for a device (10) for clutch actuation in a motor vehicle, with a cylinder housing (14, 14', 14'') which has a pneumatic pressure connection (Ep) and at least one hydraulic pressure connection (E_{H1}, E_{H2}) and in which a piston (16, 16', 16") mechanically operatively connected with a setting element (G) is received to be longitudinally displaceable, wherein the piston together with the cylinder housing (14, 14', 14") defines a pneumatic chamber (K_{P}) loadable with pressure by way of the pneumatic pressure connection (E_{P}) and at least one hydraulic chamber (K_{H1}, K_{H2}) connected with the hydraulic pressure connection (E_{H1}, E_{H2}), the chambers being separated from one another by means of a sealing arrangement (18, 20; 18', 20'; 18", 20"), and wherein a pneumatic effective area (Ap) axially bounding the pneumatic chamber (Kp) and at least one hydraulic effective area (A_{H2}) axially bounding the hydraulic chamber (K_{H2}) and oriented oppositely to the pneumatic effective area (A_{P}) are formed at the piston (16, 16', 16") so that through loading the pneumatic chamber (Kp) with pressure the setting element (G) is longitudinally displaceable by way of the piston (16, 16', 16") in an actuating direction (B) against an external restoring force acting in a restoring direction (R) and piston movement is controllable by build-up of pressure in the at least one hydraulic chamber (K_{H1}, K_{H2}) .

2. Actuator (12, 12', 12'') according to claim 1, wherein the cylinder housing (14, 14', 14") has two hydraulic pressure connections (E_{H1}, E_{H2}) and together with the piston (16, 16', 16") defines in addition to the pneumatic chamber (Kp) two hydraulic chambers (K_{H1}, K_{H2}) which are each connected with a respective one of the hydraulic connections (E_{H1}, E_{H2}) and which are separated from one another and from the pneumatic chamber (K_{P}) by means of two sealing arrangements (18, 20; 18', 20'; 18", 20"), wherein apart from, the pneumatic effective area (A_{P}) two hydraulic effective areas (A_{H1}, A_{H2}) each axially bounding a respective one of the hydraulic chambers (K_{H1}, K_{H2}) are formed oppositely to one another at the piston (16, 16', 16") so that movement of the piston (16, 16', 16") in the restoring direction (R) can be braked in controlled manner by build-up of pressure in a first one (K_{H1}) of the hydraulic chambers and in the actuating direction (B) can be braked in controlled manner by build-up of pressure in a second one (K_{H2}) of the hydraulic chambers.

3. Actuator (12, 12', 12'') according to claim 1 or 2, wherein the cylinder housing (14, 14', 14") and the piston (16, 16', 16") are formed to be stepped at the circumference for formation of the at least one hydraulic chamber (K_{H1}, K_{H2}) and the hydraulic effective area (A_{H1}, A_{H2}) bounding the latter.

4. Actuator (12) according to any one of the preceding claims, the actuator being constructed in the form of a central release device, wherein the cylinder housing (14) has in the region of a center axis (Z) a passage (22) for a transmission shaft and the piston received in the cylinder housing (14) to be longitudinally displaceable is an annular piston (16) carrying a release bearing as setting element (G).

5. Actuator (12) according to at least claims 2 and 4, wherein one (K_{H2}) of the hydraulic chambers is formed at the outer circumference of the annular piston (16) and another one (K_{H1}) of the hydraulic chambers is formed at the inner circumference of the annular piston (16), the pneumatic chamber (K_{P}) being disposed at the end with respect to the annular piston (16).

6. Actuator (12', 12") according to any one of claims 1 to 3, the actuator being constructed in the form of a clutch slave cylinder with a central blind bore (94', 94"), in which the piston (16', 16'') is received to be longitudinally displaceable, in the cylinder housing (14', 14"), the piston being in actuation-effective connection with a central piston rod as setting element (G).

7. Actuator (12') according to at least claims 2 and 6, wherein the two hydraulic chambers (K_{H1}, K_{H2}) are formed at the outer circumference of the piston (16') to be disposed axially one behind the other, the pneumatic chamber (K_{P}) being disposed at the end with respect to the piston (16').

8. Actuator (12") according to at least claims 2 and 6, wherein the piston (16") has a central recess (104") into which a central projection (106") provided at the cylinder housing (14") enters, and wherein one (K_{H1}) of the hydraulic chambers is formed between the projection (106'') of the cylinder housing (14") and the recess (104") of the piston (16") and another one (K_{H2}) of the hydraulic chambers is disposed at the outer circumference of the piston (16"), the pneumatic chamber (Kp) being disposed at the end with respect to the piston (16").

9. Actuator (12, 12', 12") according to any one of the preceding claims, wherein at least the sealing arrangement (18, 20; 18'; 18", 20") separating the pneumatic chamber (K_{P}) from the respective hydraulic chamber (K_{H1}, K_{H2}) comprises two axially spaced-apart sealing elements (54, 55, 66, 67; 54', 55', 66', 67'; 54", 55", 66", 67") with an intermediate space (62, 74; 62', 74'; 62" , 74") therebetween, the intermediate space being connected with the environment by way of an equalization channel (64, 76; 64', 76'; 64", 76").

## Revendications

1. Actionneur (12, 12', 12"), en particulier cylindre récepteur, pour un dispositif (10) pour l'actionnement d'un embrayage dans un véhicule automobile, avec un boîtier de cylindre (14, 14', 14") présentant un raccord de pression pneumatique (Ep) et au moins un raccord de pression hydraulique (E_{H1}, E_{H2}), dans lequel un piston (16, 16', 16") relié de manière active mécaniquement à un organe final (G) est logé d'une manière déplaçable longitudinalement, qui, avec le boîtier de cylindre (14, 14', 14") définit une chambre pneumatique (K_{P}) qui peut être mise sous pression par le biais du raccord de pression pneumatique (E_{P}) et au moins une chambre hydraulique (K_{H1}, K_{H2}) reliée au raccord de pression hydraulique (E_{H1}, E_{H2}), qui, au moyen d'un dispositif d'étanchéité (18, 20 ; 18', 20' ; 18", 20") sont séparées l'une de l'autre, où une surface active pneumatique (A_{P}) délimitant axialement la chambre pneumatique (Kp) et au moins une surface active hydraulique (A_{H2}) délimitant axialement la chambre hydraulique (K_{H2}), orientée de manière opposée à la surface active pneumatique (A_{P}) sont formées sur le piston (16, 16', 16"), de sorte que, par application de pression à la chambre pneumatique (K_{P}) l'organe final (G) est déplaçable longitudinalement par le biais du piston (16, 16', 16") dans une direction d'actionnement (B) contre une force de rappel externe agissant dans une direction de rappel (R) et un mouvement du piston peut être commandé par augmentation de la pression dans la au moins une chambre hydraulique (K_{H1}, K_{H2}).

2. Actionneur (12, 12', 12") selon la revendication 1, où le boîtier de cylindre (14, 14', 14") présente deux raccords de pression hydraulique (E_{H1}, EH₂) et définit conjointement avec le piston (16, 16', 16") deux chambres hydrauliques (K_{H1}, K_{H2}) en plus de la chambre pneumatique (Kp), qui sont reliées chacune à l'un des raccords de pression hydraulique (E_{H1}, E_{H2}) et sont séparées l'une de l'autre et de la chambre pneumatique (K_{P}) au moyen de deux dispositifs d'étanchéité (18, 20 ; 18', 20' ; 18", 20"), où sur le piston (16, 16', 16") à côté de la surface active pneumatique (A_{P}) deux surfaces actives hydrauliques (A_{H1}, A_{H2}) sont formées en étant opposées l'une à l'autre, qui délimitent axialement chacune l'une des chambres hydrauliques (K_{H1}, K_{H2}), de sorte qu'un mouvement du piston (16, 16', 16") peut être freiné de manière contrôlée par augmentation de la pression dans une première (K_{H1}) des chambres hydrauliques dans la direction de rappel (R) et par augmentation de la pression dans une deuxième (K_{H2}) des chambres hydrauliques dans la direction d'actionnement (B).

3. Actionneur (12, 12', 12") selon la revendication 1 ou 2, où le boîtier de cylindre (14, 14', 14") et le piston (16, 16', 16") sont formés de manière échelonnée sur la circonférence pour la formation de la au moins une chambre hydraulique (K_{H1}, K_{H2}) et de la surface active hydraulique (A_{H1}, A_{H2}) qui la délimite.

4. Actionneur (12) selon l'une des revendications précédentes, qui est conçu à la manière d'un dispositif de débrayage central, où le boîtier de cylindre (14) possède dans le domaine d'un axe central (Z) un passage (22) pour un arbre d'engrenage et le piston logé de manière déplaçable longitudinalement dans le boîtier de cylindre (14) est un piston annulaire (16) qui porte une butée de débrayage en tant qu'organe final (G).

5. Actionneur (12) selon au moins les revendications 2 et 4, où l'une (K_{H2}) des chambres hydrauliques est formée sur la circonférence extérieure du piston annulaire (16) et une autre (K_{H1}) des chambres hydrauliques est formée sur la circonférence intérieure du piston annulaire (16), tandis que la chambre pneumatique (K_{P}) est située à l'avant par rapport au piston annulaire (16).

6. Actionneur (12', 12") selon l'une des revendications 1 à 3, qui est conçu à la manière d'un cylindre récepteur d'embrayage avec un alésage borgne central (94', 94") dans le boîtier de cylindre (14', 14"), dans lequel le piston (16', 16") est logé d'une manière déplaçable longitudinalement, qui est relié d'une manière efficace pour l'actionnement à une tige de piston centrale en tant qu'organe final (G).

7. Actionneur (12') selon au moins les revendications 2 et 6, où les deux chambres hydrauliques (K_{H1}, K_{H2}) sont formées en étant situées axialement l'une derrière l'autre sur la circonférence extérieure du piston (16'), tandis que la chambre pneumatique (K_{P}) est située à l'avant par rapport au piston (16').

8. Actionneur (12") selon au moins les revendications 2 et 6, où le piston (16") présente un évidement central (104") dans lequel pénètre une saillie centrale (106") prévue sur le boîtier de cylindre (14"), et où l'une (K_{H1}) des chambres hydrauliques est formée entre la saillie (106") du boîtier de cylindre (14") et l'évidement (104") du piston (16") et une autre (K_{H2}) des chambres hydrauliques est située sur la circonférence externe du piston (16"), tandis que la chambre pneumatique (K_{P}) est située à l'avant par rapport au piston (16").

9. Actionneur (12, 12', 12") selon l'une des revendications précédentes, où au moins le dispositif d'étanchéité (18, 20 ; 18' ; 18", 20") séparant la chambre pneumatique (Kp) de chaque chambre hydraulique (K_{H1}, K_{H2}) présente deux éléments d'étanchéité espacés axialement l'un de l'autre (54, 55, 66, 67 ; 54', 55', 66', 67' ; 54", 55", 66", 67") avec une chambre intermédiaire (62, 74 ; 62', 74' ; 62", 74") entre eux, qui est reliée à l'environnement par le biais d'un canal de compensation (64, 76 ; 64', 76' ; 64", 76").
